# EUROPEAN PATENT APPLICATION

(11) **EP 4 703 209 A1**
(43) Date of publication of application: **04.03.2026**
(21) Application number: 24797013.0
(22) Date of filing: 23.04.2024
(51) Int. Cl.: B60R 11/02, H01Q 1/22, H04N 7/18, H04N 23/52, H04N 23/90

(54) **WORK VEHICLE**

(30) Priority: 28.04.2023 JP 2023075117; 22.08.2023 JP 2023134594
(71) Applicant: Kubota Corporation, Osaka 556-8601 (JP)
(72) Inventor: MITANI, Toshiki, Sakai-shi, Osaka 590-0908 (JP); FUJIMOTO, Kazutaka, Sakai-shi, Osaka 590-0908 (JP); TAKAYA, Kenta, Sakai-shi, Osaka 590-0908 (JP); TAKEOKA, Susumu, Sakai-shi, Osaka 590-0908 (JP); OGI, Tsuneo, Sakai-shi, Osaka 590-0908 (JP)
(74) Representative: Müller-Boré & Partner Patentanwälte PartG mbB
(86) International application number: PCT/JP2024/015915
(87) International publication number: WO 2024/225267

(57) **Abstract**

Provided is a working vehicle that easily secures the field of view of a front imaging unit capable of imaging the front.

The working vehicle includes a front camera 610 provided in a front portion of a cabin 10 and capable of imaging a front, a pair of right and left side cameras 640 provided on both right and left sides of the cabin 10 and capable of imaging a side, and a pair of right and left rear cameras 670 provided in a rear portion of the cabin 10 and capable of imaging a rear.

## Description

### TECHNICAL FIELD

The present invention relates to a technique of a working vehicle.

### BACKGROUND ART

Conventionally, a technique of a working vehicle including a position detection device capable of detecting a position of a vehicle body is known. For example, Patent Literature 1 discloses such a technique.

Patent Literature 1 describes a tractor including an antenna unit capable of detecting a position of a vehicle body by receiving a radio signal from a positioning satellite constituting a satellite positioning system, and a camera capable of capturing an image of the front of a machine body. The antenna unit is provided so as to be positioned in an upper portion on the front surface side of a cabin. The camera is provided below the antenna unit. The tractor described in Patent Literature 1 achieves autonomous traveling by detecting the position of the vehicle body with the antenna unit provided as described above and acquiring an image of the front of the machine body with the camera.

However, when the camera is disposed below the antenna unit as in the tractor described in Patent Literature 1, the camera is disposed at a relatively low position. Thus, there is a possibility that the field of view of the camera is deteriorated, for example, the field of view of the camera is blocked by the hood of the tractor.

### CITATION LIST

### PATENT LITERATURE

Patent Literature 1: JP 6640767 B

### SUMMARY OF INVENTION

### TECHNICAL PROBLEM

One aspect of the present disclosure has been made in view of the above circumstances, and an object of the present disclosure is to provide a working vehicle that easily secures the field of view of a front imaging unit capable of imaging the front.

### SOLUTION TO PROBLEM

The problem to be solved by one aspect of the present disclosure is as described above. A solution to the problem will be described below.

A working vehicle according to one aspect of the present disclosure includes a position detection device capable of detecting a position of a vehicle body, a front imaging unit disposed in front of the position detection device and capable of imaging a front, and a support frame that supports the position detection device and the front imaging unit and is disposed to extend over right and left pillars of a cabin.

According to one aspect of the present disclosure, it is easy to secure the field of view of the front imaging unit capable of imaging the front.

The support frame according to one aspect of the present disclosure includes a support plate formed in a flat plate shape and on which the position detection device and the front imaging unit are placed.

According to one aspect of the present disclosure, the position detection device and the front imaging unit can be supported with a simple configuration.

The working vehicle according to one aspect of the present disclosure includes a coupling portion that rotatably couples the support frame with respect to each of the right and left pillars.

According to one aspect of the present disclosure, the positions of the position detection device and the front imaging unit can be changed.

The working vehicle according to one aspect of the present disclosure includes a pair of right and left side imaging units provided on both right and left sides of the cabin and capable of imaging a side, and a pair of right and left rear imaging units provided on a rear portion of the cabin and capable of imaging a rear.

According to one aspect of the present disclosure, a wide range around the working vehicle can be imaged.

In the working vehicle according to one aspect of the present disclosure, at least one of the front imaging unit, the side imaging units, and the rear imaging units is configured to be capable of adjusting an orientation in horizontal directions.

According to one aspect of the present disclosure, the imaging unit can be adjusted to face an appropriate direction.

The working vehicle according to one aspect of the present disclosure includes a cover portion provided in at least one of the front imaging unit, the side imaging units, and the rear imaging units and covering the imaging unit from at least a side.

According to one aspect of the present disclosure, the imaging unit can be prevented from being irradiated with sunlight or light of a lighting device. In addition, adhesion of mud, dust, rainwater, and the like to the imaging unit can be reduced.

The support frame according to one aspect of the present disclosure is unrotatably coupled to each of the right and left pillars, and the support frame is fixed to a placement surface of the support plate on which the position detection device and the front imaging unit are placed.

According to one aspect of the present disclosure, the rigidity of the support frame can be improved, and a height position of the position detection device or the like can be lowered.

The support frame according to one aspect of the present disclosure includes a pair of divided frames divided in rightward-leftward directions, and the position detection device is disposed between the pair of divided frames.

According to one aspect of the present disclosure, it is possible to prevent the position detection device and the support frame from blocking the field of view of the driver in the cabin.

The working vehicle according to one aspect of the present disclosure includes a unit cover portion fixed to the support plate and covering the position detection device and the front imaging unit from above.

According to one aspect of the present disclosure, the position detection device and the front imaging unit can be protected from rainwater and the like.

The unit cover portion according to one aspect of the present disclosure is disposed at a position lower than an entire height of the vehicle body.

According to one aspect of the present disclosure, storage and transportation of the working vehicle into a garage or the like are facilitated with the support frame being not rotatable.

A front portion of the unit cover portion and a front portion of the support plate according to one aspect of the present disclosure are formed in a tapered shape in plan view.

According to one aspect of the present disclosure, it is possible to prevent the field of view of the driver in the cabin from being blocked when the driver looks at the upper front.

### ADVANTAGEOUS EFFECTS OF INVENTION

According to one aspect of the present disclosure, it is easy to secure the field of view of the front imaging unit capable of imaging the front.

### BRIEF DESCRIPTION OF DRAWINGS

Fig. 1 is a side view showing an overall configuration of a tractor according to a first embodiment of the present disclosure.
Fig. 2 is a perspective view showing a cabin, a position detection device, and a support mechanism of the tractor.
Fig. 3 is an enlarged perspective view showing a right-side portion of the support mechanism.
Fig. 4 is an enlarged perspective view showing a left-side portion of the support mechanism.
Fig. 5 is a plan view showing the position detection device and the support mechanism.
Fig. 6 is an exploded perspective view showing the position detection device and the support mechanism.
Fig. 7 is an enlarged and exploded perspective view showing a right-side portion of the support mechanism.
Fig. 8 is an enlarged and exploded perspective view showing a left-side portion of the support mechanism.
Fig. 9 is a left-side view showing the position detection device and the support mechanism at a use position.
Fig. 10 is a left-side view showing the position detection device and the support mechanism at a non-use position.
Fig. 11 is a right-side view showing a beam, wiring, the position detection device, and the support mechanism.
Fig. 12 is a schematic plan view showing an imaging range of each camera.
Fig. 13 is an upper front perspective view showing a front camera and the position detection device.
Fig. 14 is a lower front perspective view showing the front camera and the position detection device.
Fig. 15 is a lower left perspective view showing a side camera and a roof.
Fig. 16 is a lower left perspective view showing the side camera.
Fig. 17 is an enlarged side view showing a cabin, a support mechanism, and a unit cover of a tractor according to a second embodiment of the present disclosure.
Fig. 18 is a perspective view showing the cabin, the support mechanism, and the unit cover.
Fig. 19 is a plan view showing the cabin, the support mechanism, and the unit cover.
Fig. 20 is a front view showing the support mechanism, a front camera, a front camera support, and the unit cover.
Fig. 21 is an exploded perspective view showing the support mechanism, the position detection device, and the front camera support.
Fig. 22 is an exploded perspective view showing the support frame, the position detection device, the front camera support, and a unit cover portion.
Fig. 23 is a right-side perspective view showing the cabin, the support frame, and the unit cover portion.

### DESCRIPTION OF EMBODIMENTS

In the following description, the directions indicated by arrows U, D, F, B, L, and R in the drawings are defined as an upward direction, a downward direction, a forward direction, a rearward direction, a left direction, and a right direction, respectively.

First, an overall configuration of a tractor 1 according to a first embodiment of the present disclosure will be described.

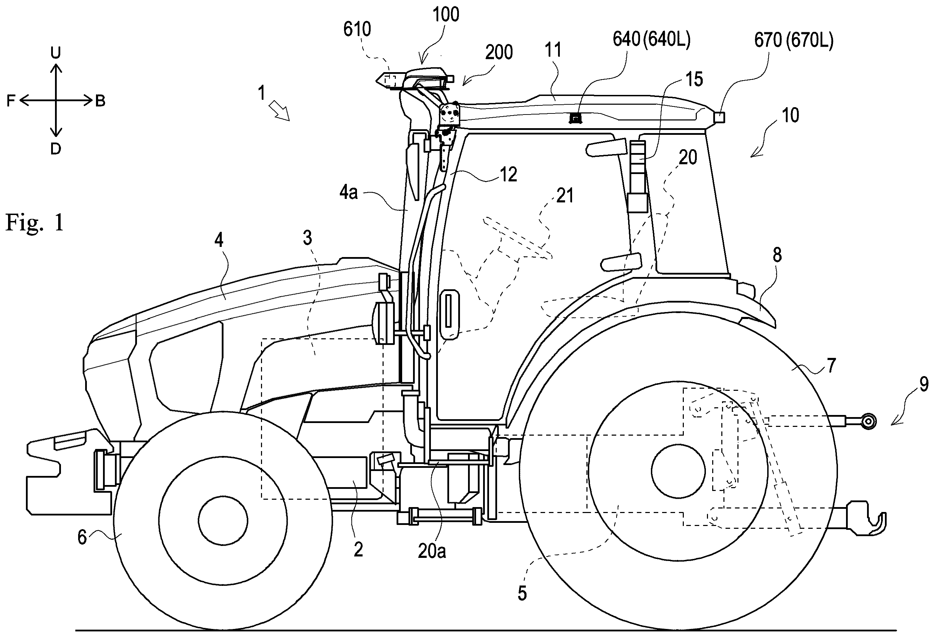

The tractor 1 shown in Fig. 1 mainly includes a machine body frame 2, an engine 3, a hood 4, a transmission case 5, a front wheel 6, a rear wheel 7, a fender 8, a lifting device 9, a cabin 10, a seat 20, and a steering wheel 21.

The machine body frame 2 is a frame-shaped member formed by appropriately combining a plurality of panel members. The machine body frame 2 is formed in a substantially rectangular shape in plan view. The machine body frame 2 is disposed in a front portion of the tractor 1 with its longitudinal directions oriented in the forward-rearward directions. The engine 3 is fixed to a rear portion of the machine body frame 2. The engine 3 is covered with the hood 4. The transmission case 5 is fixed to a rear portion of the engine 3. A muffler 4a that discharges exhaust gas of the engine 3 is disposed on the right side of the hood 4.

A front portion of the machine body frame 2 is supported by a pair of right and left front wheels 6 through a front axle mechanism (not shown). A rear portion of the transmission case 5 is supported by a pair of right and left rear wheels 7 through a rear axle mechanism (not shown). The pair of right and left rear wheels 7 is covered with the fender 8 substantially from above.

The lifting device 9 is provided at a rear portion of the transmission case 5. Various working devices (for example, a cultivator or the like) can be attached to the lifting device 9. The lifting device 9 can lift and lower the attached working device by using an actuator such as a hydraulic cylinder. The power of the engine 3 can be transmitted to the lifting device 9 through a PTO shaft (not shown).

The power of the engine 3 can be transmitted to the front wheels 6 through the front axle mechanism and can be transmitted to the rear wheels 7 through the rear axle mechanism after being shifted by a transmission (not shown) housed in the transmission case 5. The front wheels 6 and the rear wheels 7 are rotationally driven by the power of the engine 3, and the tractor 1 can travel. The working device attached to the lifting device 9 can be driven by the power of the engine 3.

The cabin 10 is provided behind the engine 3. The cabin 10 is placed on a vehicle body (the transmission case 5 or the like). A living space in which a driver gets is formed inside the cabin 10.

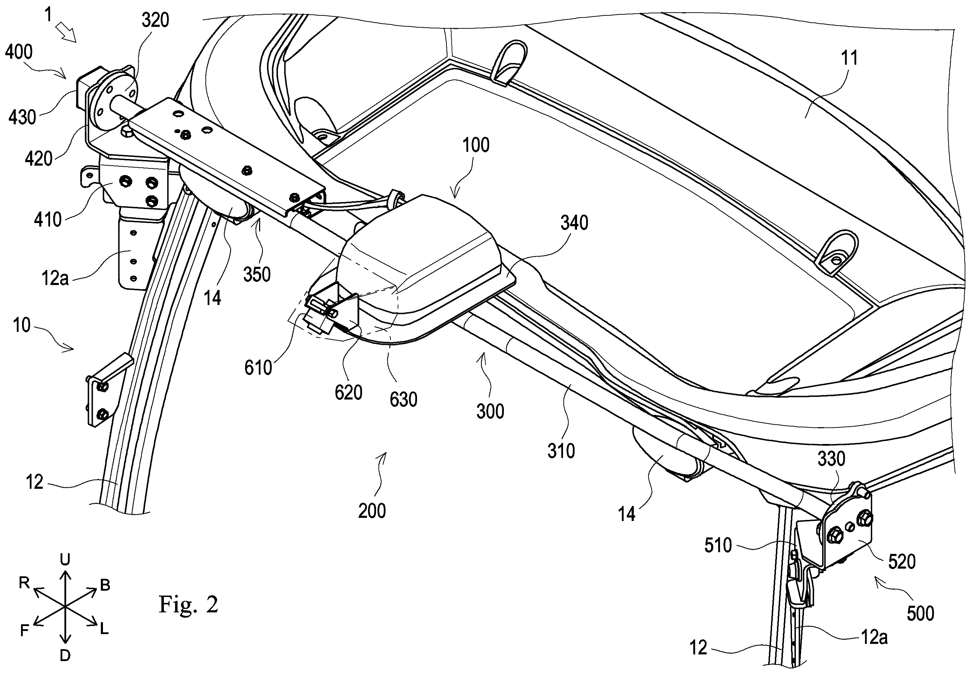

As shown in Fig. 2, the cabin 10 has right and left pillars (front pillars) 12 that support the roof 11 at the front. Each of the right and left pillars 12 is provided with a fixing piece 12a for fixing a first coupling portion 400 and a second coupling portion 500 to be described later at a middle portion in the upward-downward directions. The fixing piece 12a is formed in a substantially plate shape with its thickness directions substantially oriented in the forward-rearward directions.

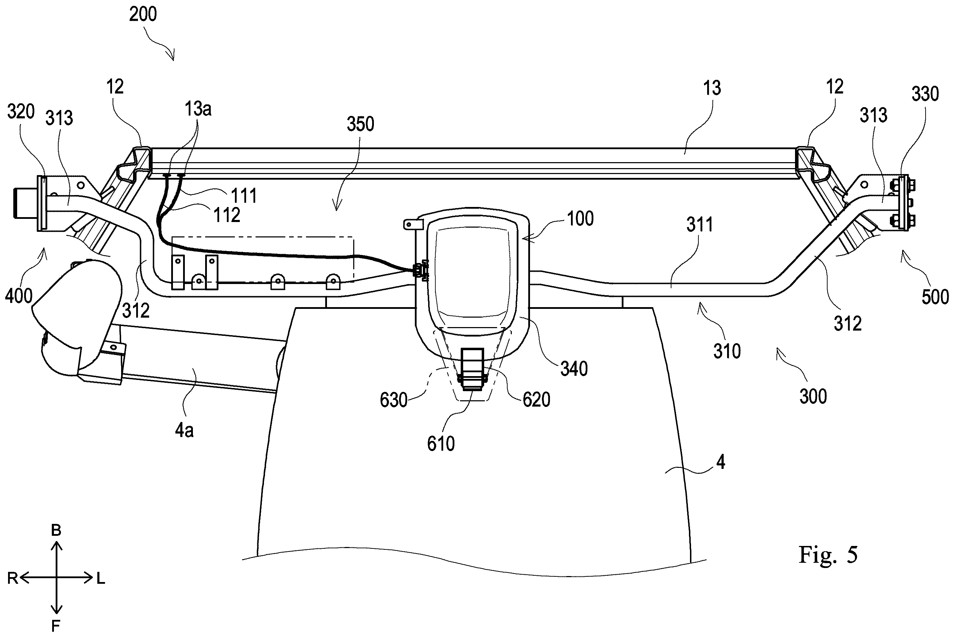

As shown in Fig. 5, the cabin 10 includes a beam 13 coupling upper end portions of the right and left pillars 12. In Fig. 5, the roof 11 and the like of the cabin 10 are not shown. A windshield is provided in a frame formed by the beam 13 and the right and left pillars 12. The beam 13 is formed with an extraction port 13a through which a wire 111 connected to a position detection device 100 to be described later and a wire 112 connected to a front camera 610 to be described later are extracted from the inside of the cabin 10 to the outside. The extraction port 13a is formed so as to penetrate the beam 13 in the forward-rearward directions. The extraction port 13a is formed in a right-side portion of the beam 13. A plurality of (two in the illustrated example) extraction ports 13a are formed at intervals in the rightward-leftward directions.

As shown in Fig. 1, a seat 20 for the driver to sit on is disposed substantially at the center of the cabin 10. The cabin 10 is provided with an auxiliary step 20a for getting on and off the seat 20. The auxiliary step 20a is installed at least on the left side of the cabin 10. The auxiliary step 20a can be installed on both sides of the cabin 10. The steering wheel 21 for adjusting the turning angle of the front wheels 6 is disposed in a front portion of the cabin 10.

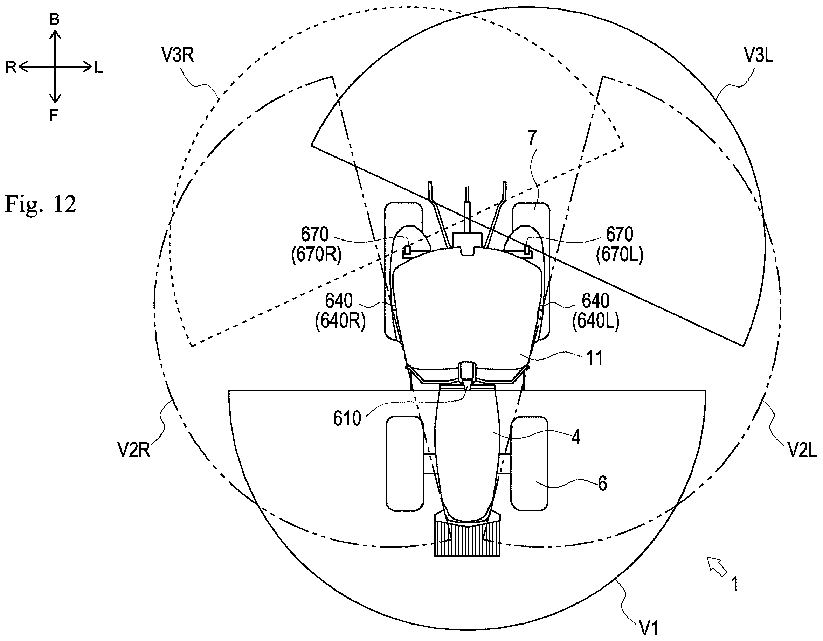

As shown in Fig. 2, the tractor 1 includes the position detection device 100 capable of detecting the position of the vehicle body and a support mechanism 200 that supports the position detection device 100. As shown in Figs. 1 and 12, the tractor 1 includes a plurality of cameras (front camera 610, side camera 640, and rear camera 670).

Hereinafter, details of the position detection device 100 and the support mechanism 200 will be described with reference to Figs. 2 to 8.

The position detection device 100 shown in Fig. 2 is a device capable of detecting a position (position information including latitude and longitude) of the vehicle body using a satellite positioning system such as a GPS, various sensors, and the like. The position detection device 100 is formed in a substantially rectangular parallelepiped box shape. The position detection device 100 includes appropriate reception means for receiving a satellite signal transmitted from a satellite. The position detection device 100 is positioned outside the cabin 10. Specifically, the position detection device 100 is positioned substantially at the center in the leftward-rightward directions of a front portion of the roof 11.

As shown in Fig. 5, the position detection device 100 is connected to the wire 111 extracted from the inside of the cabin 10 through the extraction port 13a. In the illustrated example, the wire 111 is connected to the right portion of the position detection device 100. The position detection device 100 and an appropriate control device capable of controlling the traveling of the tractor 1 can be communicably connected through the wire 111.

The tractor 1 can execute control for automatically steering the vehicle body based on the position information detected by the position detection device 100. The above-described control includes, for example, control for automatically steering the vehicle body so that the vehicle body travels straight in parallel to a predetermined traveling reference line that has been set, and control for causing the vehicle body to automatically travel along a target traveling route that has been created.

The support mechanism 200 is attached to the cabin 10 and supports the position detection device 100. The support mechanism 200 includes a support frame 300, the first coupling portion 400, and the second coupling portion 500.

The support frame 300 shown in Figs. 5 to 8 supports the position detection device 100 and is disposed to extend over the right and left pillars 12. The support frame 300 is positioned in front of the roof 11. The support frame 300 is rotatably provided with respect to the right and left pillars 12 about a central shaft (rotary shafts 322 and 336 to be described later) oriented in the rightward-leftward directions through the first coupling portion 400 and the second coupling portion 500 described later.

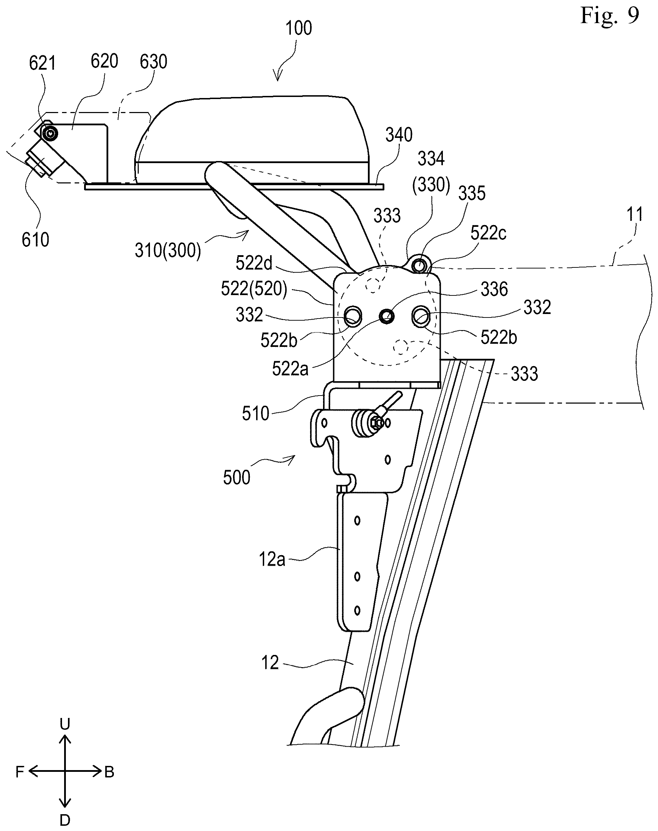

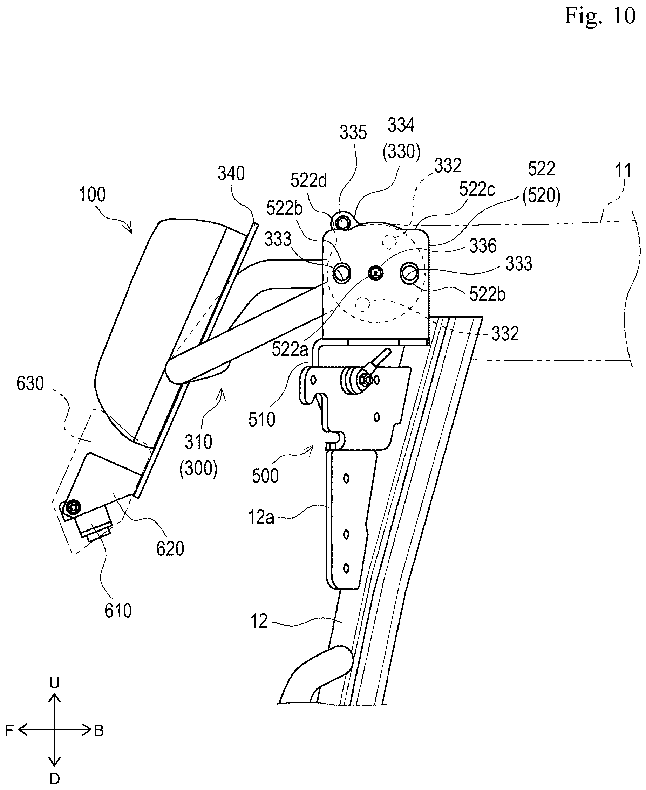

Specifically, the support frame 300 can be rotated between a use position (see Fig. 9) where the position detection device 100 is positioned above the roof 11 (upper end portion of the roof 11) and a non-use position (see Fig. 10) where the support frame is rotated in the counterclockwise direction as viewed from the left side from the use position such that the position detection device 100 is positioned below the roof 11. The rotation operation of the support frame 300 will be described in detail later. Hereinafter, the configuration of the support frame 300 will be described with reference to the use position. The support frame 300 includes a main body 310, a first end portion 320, a second end portion 330, a support plate 340, and a cover portion 350.

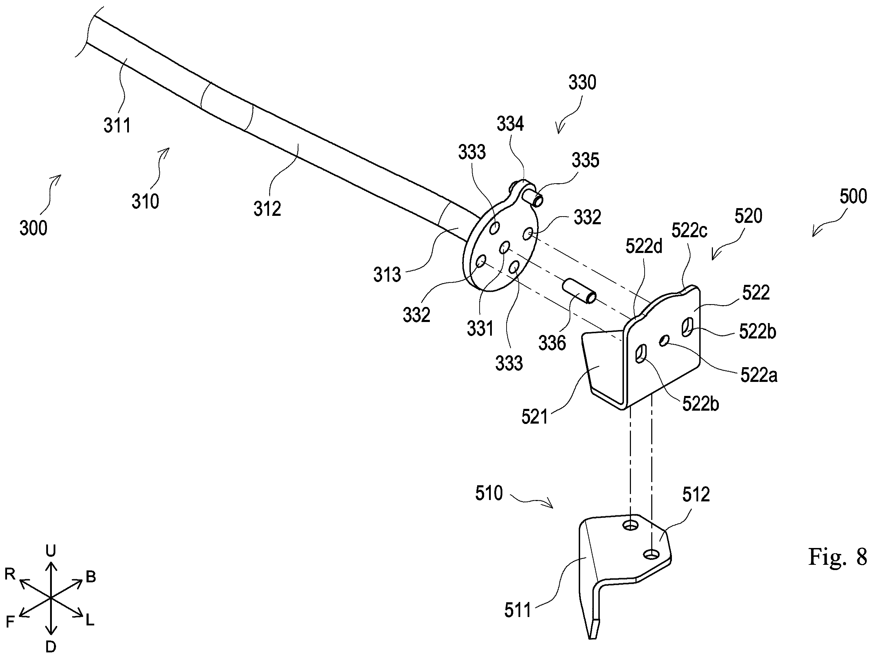

The main body 310 shown in Figs. 5 and 8 is a main structural body of the support frame 300. The main body 310 is formed by bending a rod-shaped (round bar-shaped) member elongated in the rightward-leftward directions. As the main body 310, for example, a hollow round bar (pipe) can be employed. As shown in Fig. 5, the main body 310 is formed such that both end portions in the rightward-leftward directions (end portions of a third portion 313 to be described later) are positioned outside in the rightward-leftward directions with respect to the right and left pillars 12 (portions of the pillars 12 at substantially the same height as the support frame 300). The main body 310 includes a first portion 311, a second portion 312, and the third portion 313.

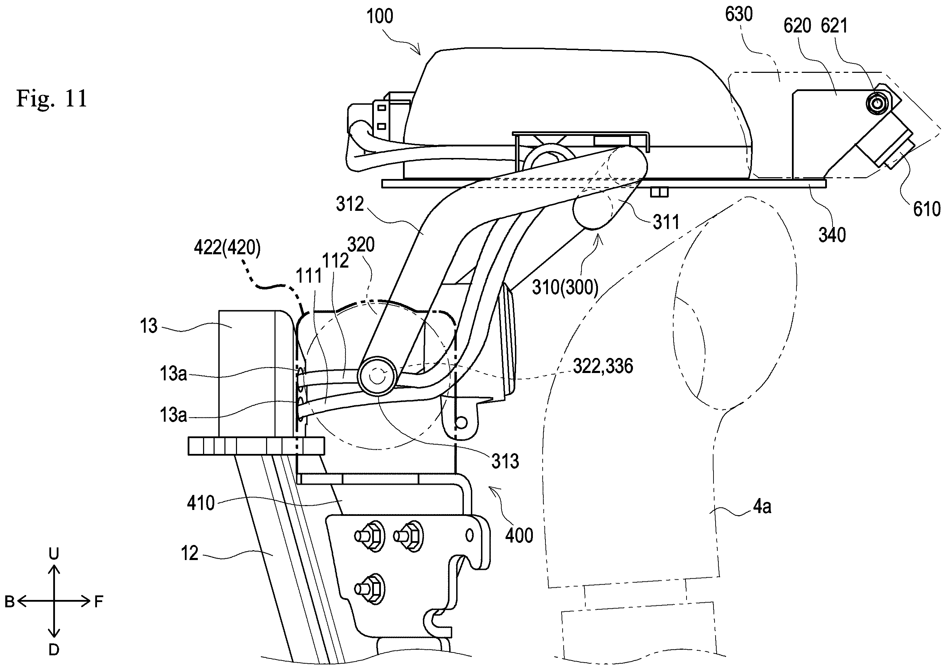

The first portion 311 is a portion on the center side in the rightward-leftward directions of the main body 310. The first portion 311 is formed to extend in the rightward-leftward directions. As shown in Fig. 5, the first portion 311 is formed such that the central portion in the rightward-leftward directions is recessed rearward in a state where the position detection device 100 is at the use position. More specifically, the first portion 311 is formed such that the central portion in the rightward-leftward directions is recessed obliquely rearward and downward with respect to both end portions in the rightward-leftward directions (see Fig. 11). The first portion 311 is formed in a linear shape except for the central portion in the rightward-leftward directions.

The second portion 312 is a portion extending right and left from both end portions in the rightward-leftward directions of the first portion 311. The second portion 312 is formed to extend obliquely rearward and downward. As shown in Fig. 5, in the present embodiment, the second portion 312 on the muffler 4a side (right side) of the right and left second portions 312 is bent so as to avoid contact with the muffler 4a. That is, in the present embodiment, the second portion 312 on the right is formed in a shape bent so as to be recessed toward the non-muffler 4a side (obliquely left rear side in plan view). As shown in Fig. 11, the second portion 312 on the right is formed to be recessed obliquely rearward and upward in the right-side view. This can avoid interference between the support frame 300 (second portion 312) and the muffler 4a.

The third portion 313 is a portion extending right and left from both end portions in the rightward-leftward directions of the second portion 312. The third portion 313 is formed to extend linearly in the rightward-leftward directions. The third portions 313 on the right and left are formed so as to be positioned substantially coaxially with each other.

The main body 310 as described above is formed in a bilaterally asymmetrical shape. Specifically, the main body 310 is formed such that the second portion 312 on the right is bent so as to avoid contact with the muffler 4a, and the second portion 312 on the left is not bent but formed in a linearly extending shape. In this manner, in the present embodiment, the shape of the main body 310 (second portion 312) is freely changed so as to avoid interference with other members. As in the present embodiment, when the third portions 313 on the right and left of the main body 310 are positioned substantially coaxially with each other, the shape, size, and the like of the middle portion (the first portion 311 and the second portion 312) can be freely changed. This can improve the degree of freedom in designing the tractor 1.

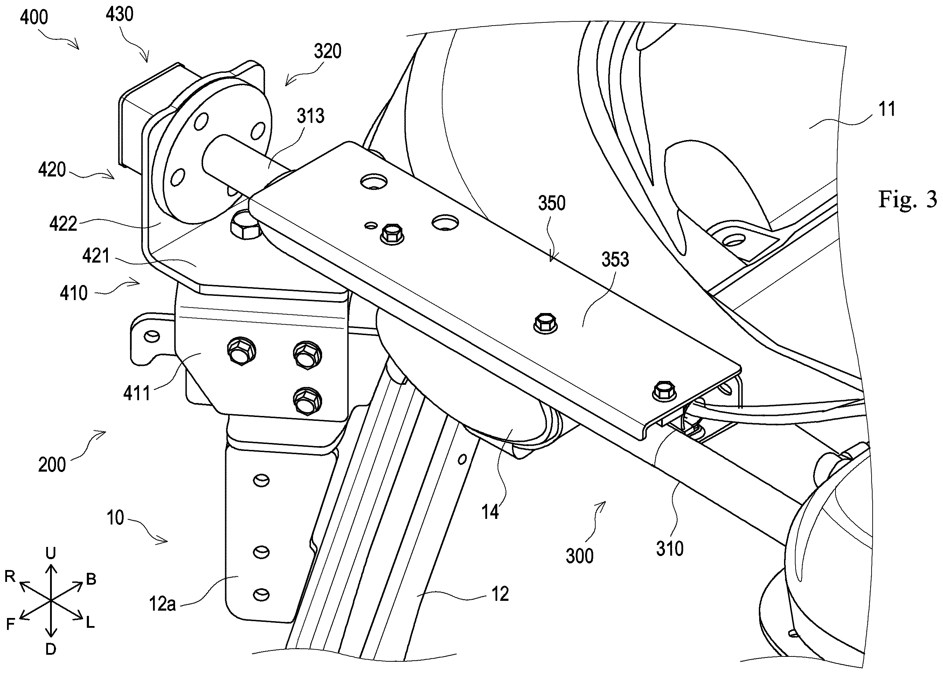

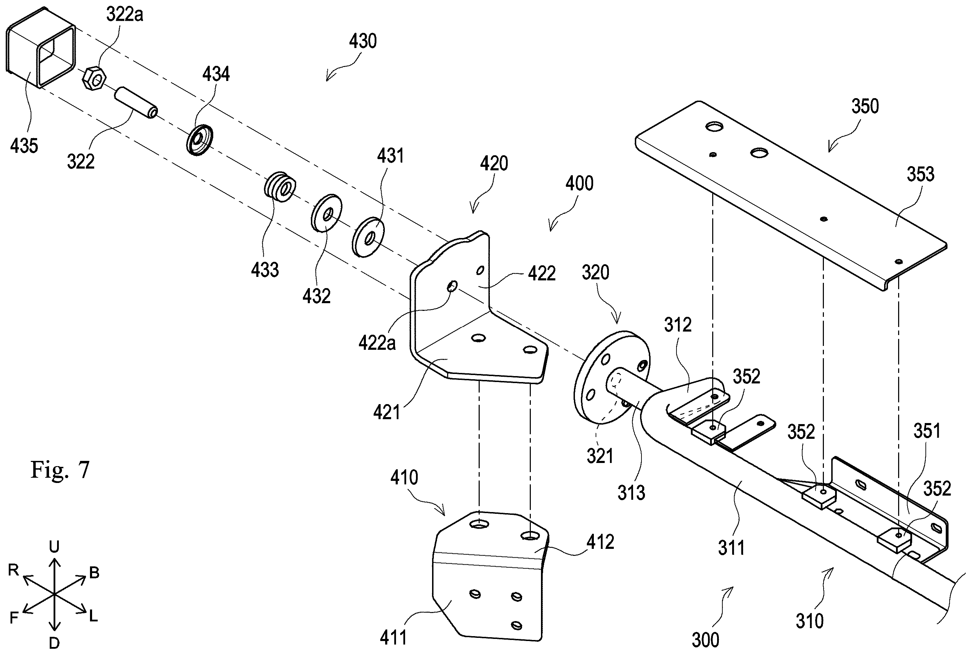

The first end portion 320 shown in Figs. 3 and 7 constitutes the right end portion of the support frame 300. The first end portion 320 is formed in a substantially plate shape with its thickness directions oriented in the rightward-leftward directions. The first end portion 320 is formed in a substantially circular shape in side view. The first end portion 320 is fixed to the right end portion of the main body 310 (third portion 313). The first end portion 320 includes a shaft attachment hole 321 and a rotary shaft 322.

The shaft attachment hole 321 is a portion (screw hole) to which the rotary shaft 322 described later is attached. The shaft attachment hole 321 is formed so as to penetrate the first end portion 320 in the rightward-leftward directions. The shaft attachment hole 321 is formed at the center of the first end portion 320 in side view. The shaft attachment hole 321 is formed so as to substantially coincide with the center of the third portion 313 in side view.

The rotary shaft 322 is a rotation center on the right of the support frame 300. The rotary shaft 322 is disposed with its axial directions oriented in the rightward-leftward directions. The rotary shaft 322 is formed of an appropriate bolt (stud bolt). The rotary shaft 322 is fitted into the shaft attachment hole 321.

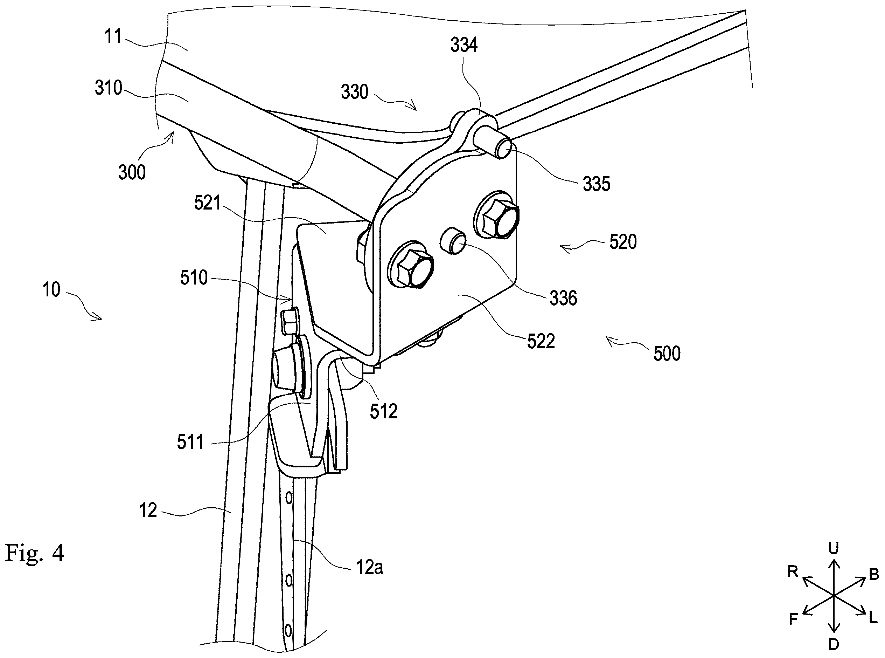

The second end portion 330 shown in Figs. 4 and 8 constitutes the left end portion of the support frame 300. The second end portion 330 is formed in a substantially plate shape with its thickness directions oriented in the rightward-leftward directions. The second end portion 330 is formed in a substantially circular shape in which a part (a protrusion 334 to be described later) protrudes in side view. The second end portion 330 is formed in substantially the same shape as the first end portion 320 except that a part thereof protrudes. The second end portion 330 includes a shaft attachment hole 331, a first fixing hole 332, a second fixing hole 333, a protrusion 334, a restricting pin 335, and a rotary shaft 336.

The shaft attachment hole 331 is a portion (screw hole) to which the rotary shaft 336 described later is attached. Since the configuration of the shaft attachment hole 331 is substantially the same as the configuration of the shaft attachment hole 321 of the first end portion 320, a detailed description thereof will be omitted.

The first fixing hole 332 is a portion for fixing the second end portion 330 to the second coupling portion 500 described later when fixing the support frame 300 at the use position. The first fixing hole 332 is formed so as to penetrate the second end portion 330 in the rightward-leftward directions. A pair of the second end portions 330 is formed with the shaft attachment hole 331 interposed therebetween.

The second fixing hole 333 is a portion for fixing the second end portion 330 to the second coupling portion 500 described later when fixing the support frame 300 at the non-use position. The second fixing hole 333 is formed so as to penetrate the second end portion 330 in the rightward-leftward directions similarly to the first fixing hole 332. A pair of the second end portions 330 is formed with the shaft attachment hole 331 interposed therebetween. The first fixing hole 332 and the second fixing hole 333 are formed so as to be aligned on the circumference centered on the shaft attachment hole 331.

The protrusion 334 is a portion that protrudes substantially upward (obliquely upward) from a substantially circular portion of the second end portion 330.

The restricting pin 335 protrudes leftward from the tip of the protrusion 334. The restricting pin 335 is formed in a substantially cylindrical shape with its axial directions oriented in the rightward-leftward directions.

The rotary shaft 336 is a rotation center on the left side of the support frame 300. The rotary shaft 336 is disposed with its axial directions oriented in the rightward-leftward directions. The rotary shaft 336 is fitted into the shaft attachment hole 331. The rotary shaft 336 is formed to have the same outer diameter as that of the rotary shaft 322 on the right.

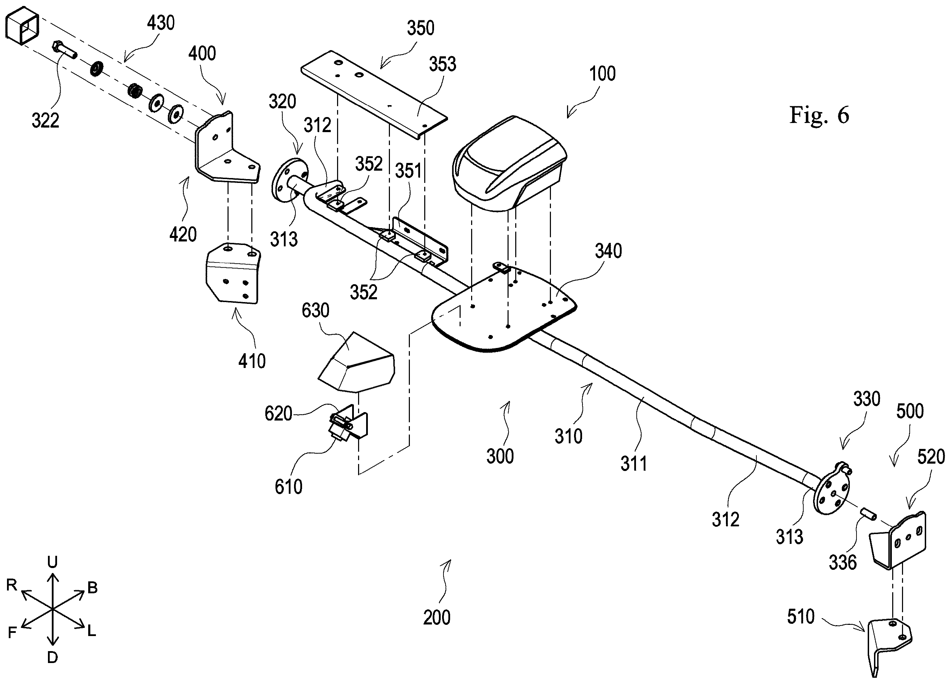

The support plate 340 shown in Fig. 6 supports the position detection device 100. The support plate 340 is provided at the central portion in the rightward-leftward directions of the main body 310 (central portion in the rightward-leftward directions of the first portion 311). The support plate 340 is formed in a substantially plate shape with its thickness directions oriented in the upward-downward directions in a state where the position detection device 100 is at the use position. The support plate 340 is fixed to the main body 310 by welding, for example. In addition, the support plate 340 is fixed to the bottom surface of the position detection device 100 using a fastener such as a bolt.

The cover portion 350 shown in Figs. 3 and 7 is provided in the main body 310 and covers at least a part of the wire 111 and the wire 112. The cover portion 350 is formed in a substantially rectangular shape elongated in the rightward-leftward directions in plan view. The cover portion 350 is provided on a right-side portion of the main body 310. More specifically, the cover portion 350 is provided in a portion of the first portion 311 of the main body 310 on the right with respect to the support plate 340. The cover portion 350 is provided on the rear side of the first portion 311. The cover portion 350 includes a lower cover portion 351, a cover fixing portion 352, and an upper cover portion 353.

The lower cover portion 351 is a portion provided at a lower portion of the main body 310 (first portion 311). The lower cover portion 351 is formed in a substantially plate shape with its thickness directions oriented in the upward-downward directions in a state where the position detection device 100 is at the use position. More specifically, the lower cover portion 351 is formed in a shape in which a rear end portion of a plate-shaped member is bent upward. The lower cover portion 351 is fixed to the lower surface of the first portion 311 by welding, for example.

The cover fixing portion 352 is a portion for fixing an upper cover portion 353 described later. A screw hole through which a fastener such as a bolt can be vertically inserted is formed in the cover fixing portion 352. A plurality of (three in the illustrated example) cover fixing portions 352 are provided on the upper surface of the main body 310 (first portion 311) at intervals in the rightward-leftward directions. The cover fixing portion 352 is fixed to the upper surface of the first portion 311 by welding, for example.

The upper cover portion 353 is a portion provided at an upper portion of the main body 310 (first portion 311). The upper cover portion 353 is formed in a substantially plate shape with its thickness directions oriented in the upward-downward directions in a state where the position detection device 100 is at the use position. The upper cover portion 353 is formed separately from the main body 310. The upper cover portion 353 is attached to the cover fixing portion 352 using a fastener such as a bolt.

The first coupling portion 400 shown in Figs. 3 and 7 rotatably couples the right end portion of the support frame 300 with respect to the pillar 12 on the right. The first coupling portion 400 is provided on the fixing piece 12a of the pillar 12 on the right. The first coupling portion 400 includes a fixing member 410, a support member 420, and a frictional force applying mechanism 430.

The fixing member 410 is fixed to the fixing piece 12a of the pillar 12, and the support member 420 described later is attached to the fixing member. The fixing member 410 is formed by bending a plate-shaped member into a substantially L shape. The fixing member 410 includes a first fixing piece 411 and a second fixing piece 412.

The first fixing piece 411 is a portion fixed to the fixing piece 12a. The first fixing piece 411 is formed such that its thickness directions are oriented in the substantially forward-rearward directions. The first fixing piece 411 is fixed to the fixing piece 12a using a fastener such as a bolt in a state where its rear surface abuts on the front surface of the fixing piece 12a.

The second fixing piece 412 is a portion to which the support member 420 is attached. The second fixing piece 412 is formed to extend substantially rearward from the upper end portion of the first fixing piece 411. The second fixing piece 412 is formed such that its thickness directions are oriented in the substantially upward-downward directions.

The support member 420 is attached to the fixing member 410 and rotatably supports the right end portion of the support frame 300. The support member 420 is formed by bending a plate-shaped member into a substantially L shape. The support member 420 includes a first support piece 421 and a second support piece 422.

The first support piece 421 is a portion fixed to the second fixing piece 412 of the fixing member 410. The first support piece 421 is formed such that its thickness directions are oriented in the substantially upward-downward directions. The first support piece 421 is fixed to the second fixing piece 412 using a fastener such as a bolt in a state where its lower surface abuts on the upper surface of the second fixing piece 412.

The second support piece 422 is a portion that rotatably supports the right end portion (first end portion 320) of the support frame 300. The second support piece 422 is formed to extend upward from the right end portion of the first support piece 421. The second support piece 422 is formed such that its thickness directions are oriented in the rightward-leftward directions. The second support piece 422 is formed in a substantially rectangular shape in side view. The second support piece 422 is formed in an arc shape in which the central portion in the rightward-leftward directions of the upper end portion protrudes upward. The second support piece 422 includes a support hole 422a.

The rotary shaft 322 of the support frame 300 is inserted into the support hole 422a, and the support hole rotatably supports the right end portion of the support frame 300. The support hole 422a is formed so as to penetrate the second support piece 422 in the rightward-leftward directions. The inner diameter of the support hole 422a is formed to be larger than the outer diameter of the rotary shaft 322. The support hole 422a is formed substantially at the center of the second support piece 422 in side view.

The frictional force applying mechanism 430 applies a frictional force to the rotation of the support frame 300. The frictional force applying mechanism 430 is provided on the right surface side of the second support piece 422. The frictional force applying mechanism 430 includes a friction plate 431, a washer 432, a spring portion 433, a spring receiving portion 434, and a case 435.

The friction plate 431 is for generating a frictional force with the right surface of the second support piece 422. The friction plate 431 is formed in a substantially annular shape. The friction plate 431 is externally fitted to the rotary shaft 322.

The washer 432 transmits the biasing force of the spring portion 433 described later to the friction plate 431. The washer 432 is formed in a substantially annular shape. The washer 432 is externally fitted to the rotary shaft 322 and abuts on the right surface of the friction plate 431.

The spring portion 433 biases the washer 432 and the friction plate 431 leftward. The spring portion 433 is formed of a compression coil spring. The spring portion 433 is externally fitted to the rotary shaft 322 and abuts on the left surface of the washer 432.

The spring receiving portion 434 is for receiving the spring portion 433. The spring receiving portion 434 is formed in a substantially annular shape. The spring receiving portion 434 is externally fitted to the rotary shaft 322 and abuts on the right surface of the spring portion 433. The spring receiving portion 434 is held by the rotary shaft 322 with a nut 322a fastened to the rotary shaft 322. By appropriately changing the fastening position of the nut 322a, the frictional force to be applied when the support frame 300 rotates can be adjusted.

The case 435 covers other members constituting the frictional force applying mechanism 430 (the friction plate 431, the washer 432, the spring portion 433, and the spring receiving portion 434) and the rotary shaft 322. The case 435 is formed in a substantially box shape that opens leftward.

The second coupling portion 500 shown in Figs. 4 and 8 rotatably couples the left end portion of the support frame 300 with respect to the pillar 12 on the left. The second coupling portion 500 is provided on the fixing piece 12a of the pillar 12 on the left. The second coupling portion 500 includes a fixing member 510 and a support member 520.

The fixing member 510 is fixed to the fixing piece 12a of the pillar 12, and the support member 520 described later is attached to the fixing member. The fixing member 510 includes a first fixing piece 511 and a second fixing piece 512. The fixing member 510 (the first fixing piece 511 and the second fixing piece 512) is substantially the same as the fixing member 410 (the first fixing piece 411 and the second fixing piece 412) except that the fixing member is formed in a symmetrical shape in the rightward-leftward directions, and thus a detailed description thereof will be omitted.

The support member 520 is attached to the fixing member 510 and rotatably supports the left end portion of the support frame 300. The support member 520 is formed by bending a plate-shaped member into a substantially L shape. The support member 520 includes a first support piece 521 and a second support piece 522.

The first support piece 521 is a portion fixed to the second fixing piece 512 of the fixing member 510. The first support piece 521 is formed such that its thickness directions are oriented in the substantially upward-downward directions. The first support piece 521 is fixed to the second fixing piece 512 using a fastener such as a bolt in a state where its lower surface abuts on the upper surface of the second fixing piece 512.

The second support piece 522 is a portion that rotatably supports the left end portion (second end portion 330) of the support frame 300. The second support piece 522 is formed to extend upward from the left end portion of the first support piece 521. The second support piece 522 is formed such that its thickness directions are oriented in the rightward-leftward directions. The second support piece 522 is formed in a substantially rectangular shape in side view. The second support piece 522 protrudes upward in which the central portion in the rightward-leftward directions of the upper end portion is formed in an arc shape with the support hole 522a centered. The second support piece 522 includes a support hole 522a, a fixing hole 522b, a first restricting portion 522c, and a second restricting portion 522d.

The rotary shaft 336 of the support frame 300 is inserted into the support hole 522a, and the support hole rotatably supports the left end portion of the support frame 300. The support hole 522a is formed so as to penetrate the second support piece 522 in the rightward-leftward directions. The support hole 522a is formed substantially at the center of the second support piece 522 in side view. The inner diameter of the support hole 522a is formed to be larger than the inner diameter of the support hole 422a of the first coupling portion 400. This makes it larger the gap between the support hole 522a and the rotary shaft 322 inserted through the support hole 522a than the gap between the support hole 422a and the rotary shaft 336 inserted through the support hole 422a.

The fixing hole 522b is a portion used when the support frame 300 (second end portion 330) is fixed at the use position or the non-use position. A pair of the fixing holes 522b is formed so as to overlap the pair of first fixing holes 332 of the support frame 300 (second end portion 330), respectively, at the use position, and to overlap the pair of second fixing holes 333 of the support frame 300 (second end portion 330), respectively, at the non-use position in side view (see Figs. 9 and 10). The pair of fixing holes 522b is formed in a long hole shape extending along the circumference of a circle having the rotational center of the support frame 300 (axis of the rotary shaft 336) as a circular center. The support frame 300 at the use position or the non-use position and the support member 520 are fixed by fixing bolts and nuts inserted through the fixing hole 522b and the first fixing hole 332 or the second fixing hole 333.

The first restricting portion 522c restricts the rotation of the support frame 300 at the use position. The first restricting portion 522c is formed on the upper surface of a rear portion (a portion at the rear of the arc-shaped portion) of the second support piece 522. When the restricting pin 335 of the support frame 300 abuts on the first restricting portion 522c, further rotation of the support frame 300 at the use position in the clockwise direction in left-side view is restricted (see Fig. 9).

The second restricting portion 522d restricts the rotation of the support frame 300 at the non-use position. The second restricting portion 522d is formed on the upper surface of a front portion (a portion in front of the arc-shaped portion) of the second support piece 522. When the restricting pin 335 of the support frame 300 abuts on the second restricting portion 522d, further rotation of the support frame 300 at the non-use position in the counterclockwise direction in left-side view is restricted (see Fig. 10).

Next, an operation of changing the position detection device 100 to the use position and the non-use position by rotating the support mechanism 200 (support frame 300) will be described with reference to Figs. 9 and 10.

First, an operation of changing the position of the position detection device 100 from the use position to the non-use position will be described.

Fig. 9 shows a state in which the position detection device 100 is positioned at the use position. In this state, the second end portion 330 of the support frame 300 at the use position is fixed to the second coupling portion 500 with a fixing bolt and a nut. In Figs. 9 and 10, the bolt and the nut are not shown.

In the state of being positioned at the use position, the upper end portion of the position detection device 100 fixed to the support frame 300 is positioned above the upper end portion (highest portion) of the roof 11 of the cabin 10 (see Fig. 1). At the use position, the support mechanism 200 can support the position detection device 100 at a position (orientation) at which the position of the vehicle body can be suitably detected.

When the position of the position detection device 100 is changed to the non-use position, the operator first removes the bolt and the nut fixing the second end portion 330 of the support frame 300 to the second coupling portion 500. This allows the support frame 300 to rotate to the non-use position.

Next, the operator stands on the left side of the cabin 10 (the side on which the restricting pin 335 and the like are provided) and grips the left side portion (for example, the second portion 312) of the support frame 300. Since the support frame 300 extends leftward with respect to the pillars 12, the operator can easily grip the support frame 300 from the side (left side) of the cabin 10.

Next, the operator rotates the held support frame 300 to the non-use position. At this time, a frictional force from the frictional force applying mechanism 430 is applied to the support frame 300. This can suppress the rotation (unintended rotation) of the support frame 300 because of its own weight. With the rotation of the support frame 300, the restricting pin 335 moves along the arc-shaped portion of the second support piece 522.

With the rotation of the support frame 300, the first end portion 320 and the second end portion 330 slide with respect to the second support piece 422 and the second support piece 522, respectively. In the present embodiment, the first end portion 320 and the second end portion 330 are formed in a substantially circular shape in side view. Thus, the sliding surfaces of the second support piece 422 and the second support piece 522 are always covered by the first end portion 320 and the second end portion 330 (regardless of the rotation position of the support frame 300), unlike the case where each end portion is formed in a different shape (other than a circular shape). As a result, even when the coating of the second support piece 422 and the second support piece 522 is peeled off along with the sliding of the first end portion 320 and the second end portion 330, it is possible to make the portion where the coating is peeled off less noticeable.

As shown in Fig. 10, rotation of the support frame 300 to the non-use position causes the restricting pin 335 of the support frame 300 to abut on the second restricting portion 522d of the support member 420, and thus, further rotation of the support frame 300 at the non-use position in the counterclockwise direction in left-side view is restricted.

In the present embodiment, operability of rotation of the support frame 300 can be improved by operating the support frame 300 from the left. That is, since the restricting pin 335, the first restricting portion 522c, and the second restricting portion 522d are provided on the left of the support frame 300, when the support frame 300 is operated from the left, it is easy to visually confirm the contact of the restricting pin 335 with the first restricting portion 522c and the second restricting portion 522d.

Next, the operator fixes the second end portion 330 of the support frame 300 at the non-use position to the second coupling portion 500 using a bolt and a nut. As a result, the position change of the position detection device 100 to the non-use position is completed.

Fig. 10 shows a state in which the position detection device 100 is positioned at the non-use position. In the state of being positioned at the non-use position, the upper end portion of the position detection device 100 fixed to the support frame 300 is positioned below the upper end portion of the roof 11 of the cabin 10. At the non-use position, the support mechanism 200 can support the position detection device 100 so as to downsize the tractor 1 in the upward-downward directions. This facilitates storage and transportation of the tractor 1 into a garage or the like.

Next, an operation of changing the position of the position detection device 100 from the non-use position to the use position will be described.

First, the operator removes the bolt and the nut fixing the second end portion 330 of the support frame 300 to the second coupling portion 500. This allows the support frame 300 to rotate to the use position.

Next, the operator grips the main body 310 (for example, the second portion 312) of the support frame 300 and rotates the support frame 300 to the use position. At this time as well, a frictional force from the frictional force applying mechanism 430 is applied to the support frame 300.

As shown in Fig. 9, the rotation of the support frame 300 to the use position causes the restricting pin 335 of the support frame 300 to abut on the first restricting portion 522c of the support member 420, and thus, further rotation of the support frame 300 at the use position in the clockwise direction in left-side view is restricted.

Next, the operator fixes the second end portion 330 of the support frame 300 at the use position to the second coupling portion 500 using a bolt and a nut. As a result, the position change of the position detection device 100 to the use position is completed.

In the present embodiment, only the left side (the second end portion 330 and the second coupling portion 500) of the support frame 300 is fixed with a bolt and a nut. Thus, a series of operations for rotating the support frame 300 can be performed only on the left side. As a result, it is not necessary for the operator to move to both the right and left sides to fix the support frame 300, and the burden of work can be reduced. In addition, the operator can be prevented from forgetting fixing of one of the right and left.

In the present embodiment, the fixing hole (first fixing hole 332) for the use position and the fixing hole (second fixing hole 333) for the non-use position are formed in the second end portion 330, and the fixing hole (fixing hole 522b) common to the use position and the non-use position is formed in the second support piece 522. This makes the fixing positions of the bolt and the nut common between the use position and the non-use position unlike the case where the fixing holes for the use position and the non-use position are formed on the second support piece 522 side. This can improve the workability of the fixing work of the bolt and the nut.

Hereinafter, a plurality of cameras (front camera 610, side camera 640, and rear camera 670) provided in the tractor 1 will be described.

As shown in Figs. 1 and 12, five cameras are provided around the cabin 10 (roof 11). Specifically, a front camera 610 is provided in the front portion of the cabin 10 (more specifically, in the cabin 10 formed in a rectangular shape in plan view, a portion corresponding to one side on the front side). A pair of right and left side cameras 640 is provided on both sides on the right and left of the cabin 10 (more specifically, in the cabin 10 formed in a rectangular shape in plan view, portions corresponding to right and left sides). A pair of right and left rear cameras 670 is provided on the rear portion of the cabin 10 (more specifically, in the cabin 10 formed in a rectangular shape in plan view, a portion corresponding to one side on the rear). In the following description, among the pair of right and left side cameras 640, the side camera 640 provided on the left of the vehicle body may be referred to as a left side camera 640L, and the side camera 640 provided on the right of the vehicle body may be referred to as a right side camera 640R. Among the pair of right and left rear cameras 670, the rear camera 670 provided on the left of the vehicle body may be referred to as a left rear camera 670L, and the rear camera 670 provided on the right of the vehicle body may be referred to as a right rear camera 670R.

The tractor 1 can control the operation of the vehicle body based on the images taken by the cameras. For example, it is possible to learn the appearance of a person based on an image taken by each camera, and perform control to stop the tractor 1 when the person has approached the vicinity of the tractor 1 based on an imaging result of each camera. The use of each camera is not limited to this, and the taken image can be used for various purposes.

For each camera, for example, a wide-angle lens (for example, a fisheye lens or the like) capable of imaging a wide range of 180 degrees or more is used. The plan view shown in Fig. 12 schematically shows a range that can be imaged by each camera. In Fig. 12, to distinguish the imaging ranges of the cameras, the line types indicating the imaging ranges of the cameras are appropriately changed.

The front camera 610 is disposed so as to face forward from the front portion of the cabin 10. This allows the front camera 610 to take an image of a range V1 in front of the cabin 10. The wire 112 (see Fig. 5) is appropriately connected to the front camera 610.

The side cameras 640 on the right and left are disposed so as to face the sides from the side portions of the cabin 10. This allows the side cameras 640 on the right and left to take images of a range V2L and a range V2R on the sides of the cabin 10. The side cameras 640 on the right and left are disposed so as to face slightly forward. This allows the front side of the imaging range of the side cameras 640 on the right and left to slightly move inward to take an image of the vicinity of the side surfaces of the hood 4 of the tractor 1. When the side cameras 640 are faced slightly forward in this manner, the imaging ranges of the front camera 610 and the side cameras 640 are overlapped near the front wheels 6 of the tractor 1, and the circumference of the front wheels 6 can be imaged by both the front camera 610 and the side cameras 640.

The rear cameras 670 on the right and left are disposed so as to face rearward from the rear portion of the cabin 10. This allows the rear cameras 670 on the right and left to take images of a range V3L and a range V3R behind the cabin 10. The rear cameras 670 on the right and left are disposed so as to face slightly outside the vehicle body. This allows the outside of the imaging range of the rear cameras 670 on the right and left to slightly move forward to take an image of the sides of the rear wheels 7. When the rear cameras 670 are faced slightly outward in this manner, the imaging ranges of the rear cameras 670 and the side cameras 640 are overlapped obliquely behind the tractor 1, and the sides of the rear wheels 7 can be imaged by both the rear cameras 670 and the side cameras 640.

The imaging ranges of the rear cameras 670 on the right and left overlap behind the tractor 1. This allows the rear cameras 670 on the right and left to take an image of the rear of the tractor 1. Further, the imaging ranges of the three cameras (left side camera 640L, left rear camera 670L, and right rear camera 670R, and right side camera 640R, right rear camera 670R, and left rear camera 670L) overlap obliquely behind the tractor 1. With such a configuration, the circumference of the working device (for example, a rotary tilling device or the like) provided at the rear portion of the tractor 1 can be imaged by two or three cameras.

Each camera is disposed so as to face downward at an angle of approximately 45 degrees. By unifying the angles in this manner, it is possible to improve the distance measurement performance of each camera and to optimize the field of view of each camera.

Hereinafter, a configuration related to attachment of each camera will be described.

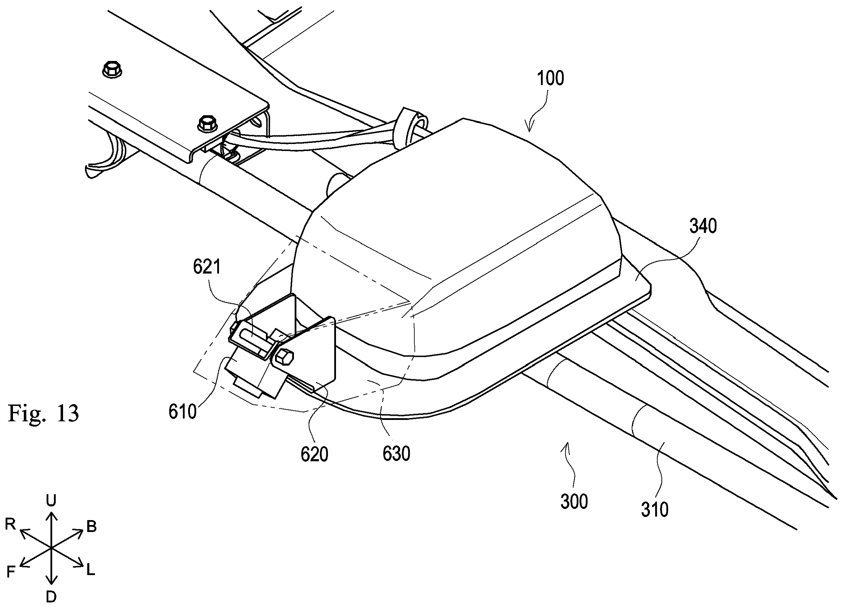

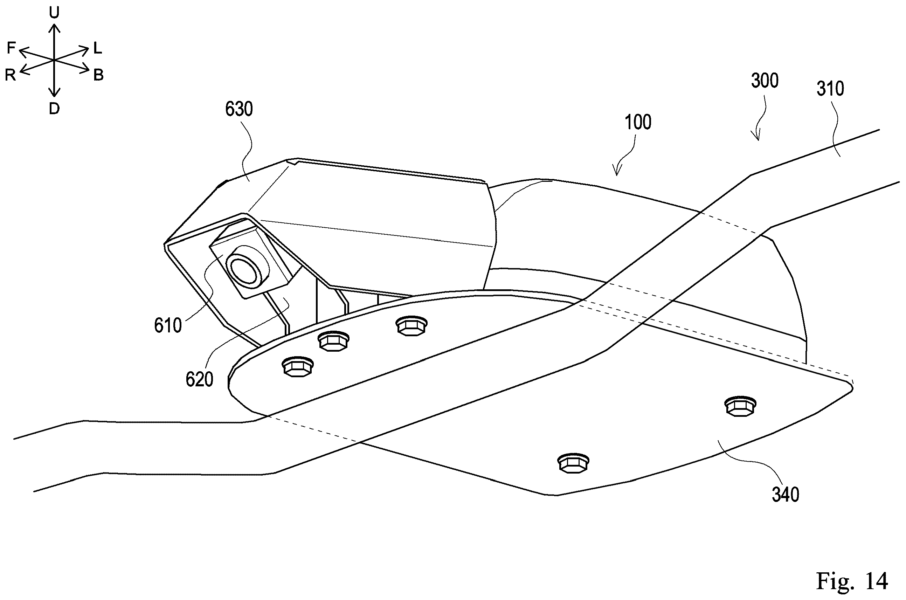

As shown in Figs. 9, 13, 14, and the like, the front camera 610 is fixed to the upper surface of the support plate 340 together with the position detection device 100. Specifically, the front camera 610 is placed on the upper surface of the support plate 340 through the front camera support 620.

The front camera support 620 is a member having a pair of right and left side walls. The front camera support 620 is fixed to the support plate 340 in front of the position detection device 100. The front camera support 620 is formed to protrude further forward from the front end of the support plate 340. A support shaft 621 whose axial directions are oriented to the right and left is provided at front end portions of right and left side walls of the front camera support 620. The support shaft 621 can be formed of, for example, a bolt.

The front camera 610 is disposed between the right and left side walls of the front camera support 620, and is supported by the support shaft 621. This allows the front camera 610 to be disposed above the support plate 340 and in front of the position detection device 100 (at substantially the same height as the position detection device 100). The front camera 610 is disposed in front of the front end of the support plate 340.

For example, the front camera 610 can be rotated upward and downward about the support shaft 621 by loosening the bolt of the support shaft 621. The angle of the front camera 610 in the upward-downward directions can be adjusted by tightening the bolt while the front camera 610 is faced at any angle.

The circumference of the front camera 610 is covered with a front camera cover portion 630. The front camera cover portion 630 is formed by appropriately bending a panel member. The front camera cover portion 630 is formed to cover the front camera 610 from the upper side, the right and left sides, and the front side. The front camera cover portion 630 is formed so as to open a direction in which a lens of the front camera 610 faces (in the present embodiment, obliquely forward by 45 degrees and downward). The front camera cover portion 630 is fixed to the front end portion of the support plate 340 in front of the position detection device 100. The front camera cover portion 630 is preferably formed in a shape having a sense of unity with the position detection device 100.

By providing the front camera cover portion 630 in this manner, the front camera cover portion 630 can prevent direct irradiation of the front camera 610 with sunlight, light from a lighting device (for example, a front work lamp 14 and the like (see Fig. 2)) provided in the tractor 1, light from reflection of a water surface of a field, or the like while securing the field of view of the front camera 610. Further, by providing the front camera cover portion 630, it is possible to reduce adhesion of water droplets such as mud, dust, and rain to the front camera 610 (lens).

As shown in Figs. 1, 12, and the like, the side cameras 640 are provided on the right and left side portions of the roof 11 of the cabin 10, respectively. Since the pair of right and left side cameras 640 is configured to be bilaterally symmetrical, the following description focuses on the left side camera 640L provided on the left of the vehicle body, and the description of the right side camera 640R is omitted.

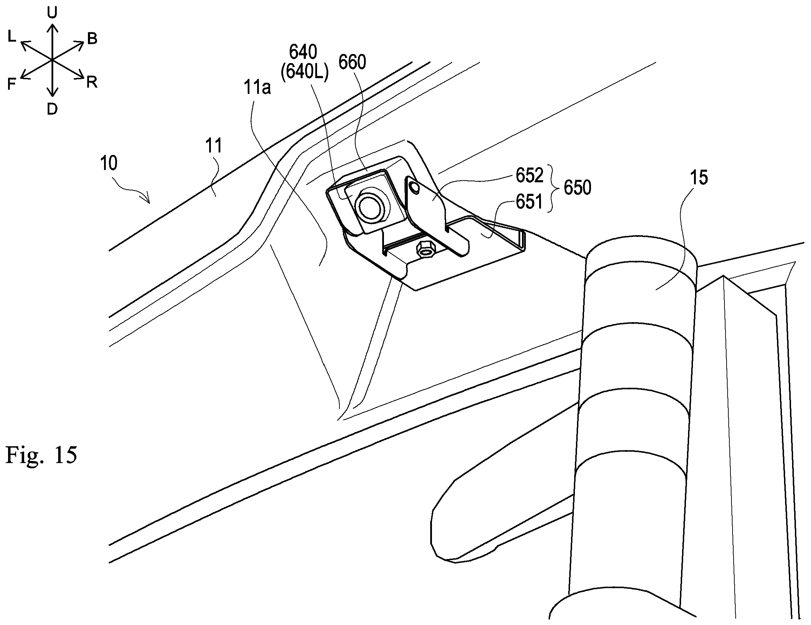

As shown in Fig. 1, the left side camera 640L is provided in a substantially central portion (in front of a state display lamp 15 provided on a side portion of the cabin 10 and configured to display a control state of the tractor 1) in the forward-rearward directions of the roof 11. As shown in Fig. 15, a recess 11a is formed in a left side portion of the roof 11, and the left side camera 640L is disposed inside the recess 11a. The left side camera 640L is fixed to the roof 11 (more specifically, a frame constituting the framework of the cabin 10) through the side camera support 650. The side camera support 650 mainly includes a fixing portion 651 and a horizontal rotation portion 652.

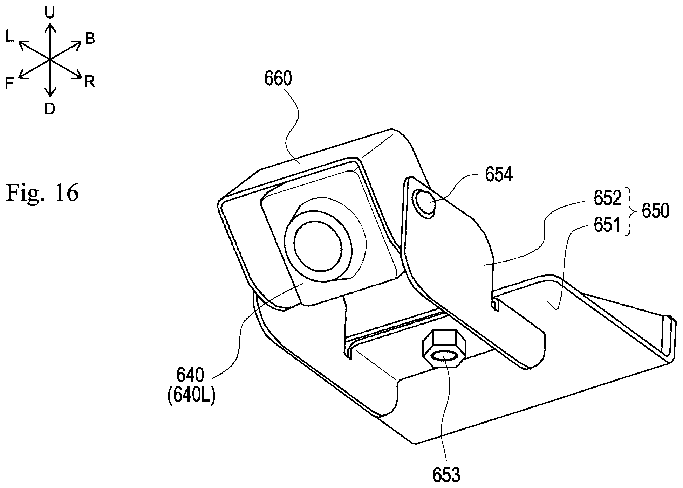

The fixing portion 651 shown in Figs. 15 and 16 is a portion fixed to the roof 11 (the frame of the cabin 10). The fixing portion 651 is formed by appropriately bending a flat plate. The fixing portion 651 is provided with a rib for reinforcement as necessary. The fixing portion 651 is fixed to the roof 11 inside the recess 11a of the roof 11.

The horizontal rotation portion 652 is a portion that supports the left side camera 640L and is provided to be horizontally rotatable with respect to the fixing portion 651. The right end portion of the horizontal rotation portion 652 is coupled to the fixing portion 651 through a support shaft 653 whose axial directions are oriented in the upward-downward directions. The support shaft 653 can be formed of, for example, a bolt. The left end portion of the horizontal rotation portion 652 is formed in a shape having a pair of front and rear side walls.

The left side camera 640L is supported by the side camera support 650 (horizontal rotation portion 652) through the side camera cover portion 660. The side camera cover portion 660 is a member that covers the left side camera 640L from the circumference. The side camera cover portion 660 is formed by appropriately bending a panel member. The side camera cover portion 660 is formed to cover the left side camera 640L from the upper side, the left side, and both the front and rear sides. The side camera cover portion 660 is formed so as to open a direction in which a lens of the left side camera 640L faces (in the present embodiment, obliquely leftward by 45 degrees and downward).

The side camera cover portion 660 to which the left side camera 640L is fixed is disposed between the front and rear side walls of the horizontal rotation portion 652, and is coupled to the horizontal rotation portion 652 through a support shaft 654 whose axial directions are oriented in the forward-rearward directions.

In the left side camera 640L configured as described above, for example, by loosening the bolt of the support shaft 653, the horizontal rotation portion 652 and thus the left side camera 640L can be rotated back and forth about the support shaft 653. For example, the left side camera 640L and the side camera cover portion 660 can be rotated in the upward-downward directions about the support shaft 654 by loosening the bolt of the support shaft 654. The angle of the left side camera 640L in the forward-rearward directions (horizontal directions) and the upward-downward directions can be adjusted by tightening the bolt while the left side camera 640L is faced at any angle.

In addition, by providing the side camera cover portion 660, the side camera cover portion 660 can prevent direct irradiation of the left side camera 640L with sunlight, light from a lighting device (for example, the state display lamp 15 and the like (see Fig. 15)) provided in the tractor 1, light from reflection of a water surface of a field, or the like while securing the field of view of the left side camera 640L. In addition, by providing the side camera cover portion 660, it is possible to reduce adhesion of water droplets such as mud, dust, and rain to the left side camera 640L (lens).

As shown in Fig. 12, the rear cameras 670 are provided on the right and left rear portions of the roof 11 of the cabin 10, respectively. The pair of right and left rear cameras 670 is configured to be bilaterally symmetrical. Although detailed description is omitted, the rear camera 670 is provided with members similar to the side camera support 650 and the side camera cover portion 660 of the side camera 640. As a result, the rear camera 670 is configured to be capable of adjusting the angle. In addition, the cover portion provided in the rear camera 670 reduces irradiation of the rear camera 670 with light, adhesion of mud to the rear camera 670, and the like.

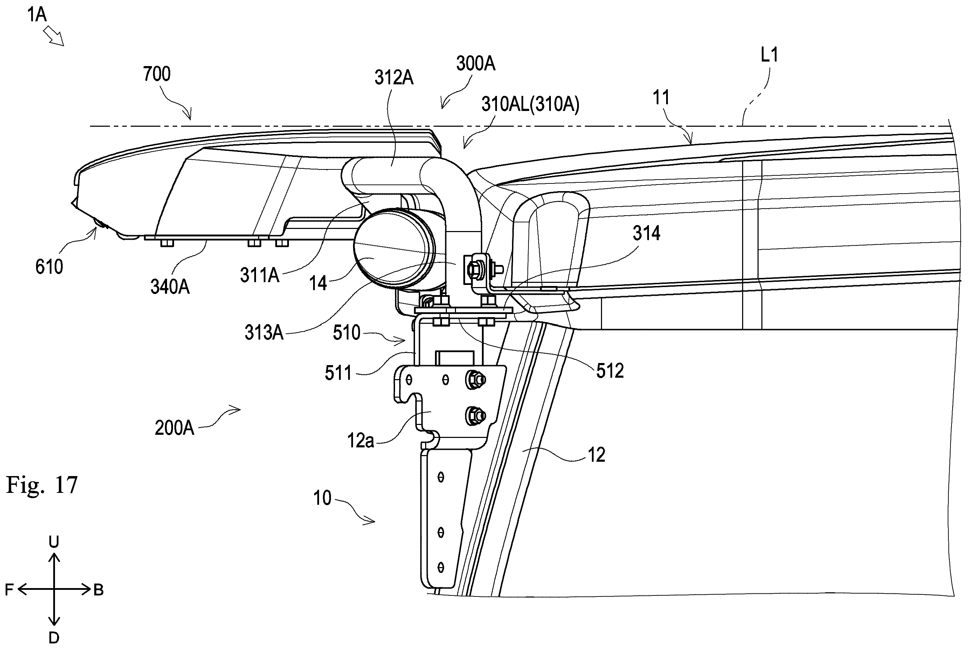

The tractor 1 according to the first embodiment of the present disclosure has been described. Hereinafter, a tractor 1A according to another embodiment (second embodiment) will be described with reference to Figs. 17 to 23. Hereinafter, configurations different from those of the first embodiment will be described, and description of configurations similar to those of the first embodiment will be omitted as appropriate.

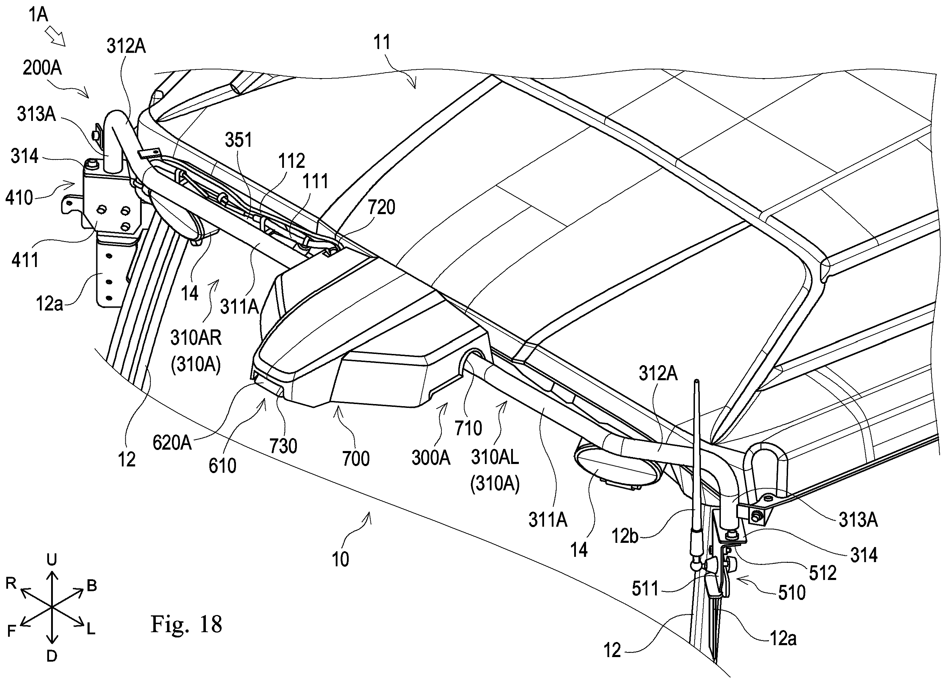

The tractor 1A shown in Figs. 17 and 18 is different from the tractor in the first embodiment mainly in the configuration of a support mechanism 200A. Specifically, the support mechanism 200A according to the present embodiment is different from the support mechanism in the first embodiment in that a support frame 300A is provided unrotatably with respect to the right and left pillars 12. The tractor 1A is different from the tractor in the first embodiment in that the tractor 1A includes a unit cover portion 700 that covers the position detection device 100 and the front camera 610.

The support frame 300A supports the position detection device 100, the front camera 610, and the unit cover portion 700 to be described later. The support frame 300A includes a main body 310A and a support plate 340A.

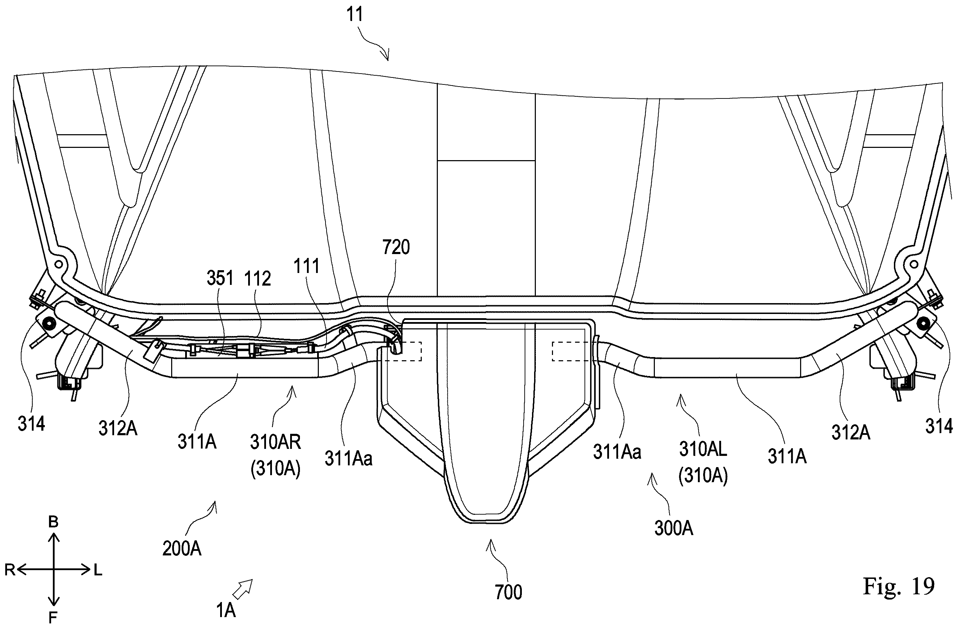

The main body 310A shown in Figs. 19 to 21 is a main structural body of the support frame 300A. The main body 310A includes a right main body 310AR and a left main body 310AL divided in the rightward-leftward directions. The right main body 310AR and the left main body 310AL are configured to be bilaterally symmetrical to each other. Hereinafter, description will be given focusing on the left main body 310AL, and description of the right main body 310AR will be appropriately omitted. The left main body 310AL includes a first portion 311A, a second portion 312A, a third portion 313A, and a fixing end portion 314.

The first portion 311A is a portion on the right side (center side in the rightward-leftward directions of the vehicle body) of the left main body 310AL. The first portion 311A is formed to extend substantially in the rightward-leftward directions. As shown in Figs. 19 to 21, the first portion 311A is formed such that a rightward-leftward intermediate portion 311Aa (intermediate portion on the right of the center in the rightward-leftward directions) extends obliquely downward and rearward. The first portion 311A is formed linearly except for the rightward-leftward intermediate portion 311Aa.

The second portion 312A is a portion extending leftward from a left end portion (an end portion on the outer side in the rightward-leftward directions of the vehicle body) of the left main body 310AL. More specifically, the second portion 312A is formed to extend obliquely leftward and rearward.

The third portion 313A is a portion extending downward from the left end portion of the second portion 312A.

The fixing end portion 314 constitutes an end portion fixed to the pillar 12 side (fixing member 510). The fixing end portion 314 is provided at the lower end portion of the third portion 313A. The fixing end portion 314 is formed in a substantially plate shape with its thickness directions oriented in the upward-downward directions.

The configuration of the left main body 310AL has been described above. As described above, the right main body 310AR is configured to be bilaterally symmetrical with the left main body 310AL, and thus description thereof is omitted.

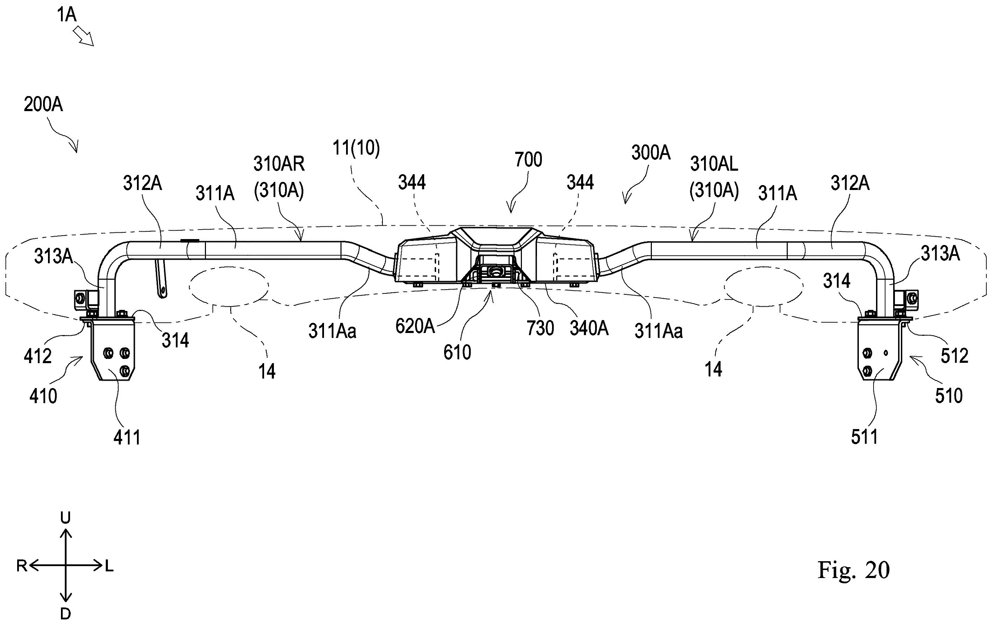

As shown in Fig. 19, the main body 310A (the right main body 310AR and the left main body 310AL) in which the first portion 311A, the second portion 312A, and the third portion 313A are formed in the above-described shapes bulges forward along the front end portion of the roof 11 in plan view. As shown in Fig. 20, the main body 310A is disposed such that the first portion 311A is positioned above the front work lamp 14.

As shown in Figs. 18, 20, and 21, in the right main body 310AR and the left main body 310AL, the fixing end portions 314 are fixed to the fixing member 410 (first coupling portion 400) and the fixing member 510 (second coupling portion 500) provided in the fixing pieces 12a of the right and left pillars 12, respectively. Specifically, the fixing end portion 314 of the right main body 310AR is fixed to the second fixing piece 412 of the fixing member 410 using a fastener such as a bolt. The fixing end portion 314 of the left main body 310AL is fixed to the second fixing piece 512 of the fixing member 510 using a fastener such as a bolt. In this manner, the right main body 310AR and the left main body 310AL are unrotatably fixed to the left and right pillars 12 (see Fig. 18). In the present embodiment, the support member 420, the frictional force applying mechanism 430, and the support member 520 exemplified in the first embodiment are not provided.

In the present embodiment, unlike the main body 310 of the first embodiment, it is not necessary to complicate the shape of the main body 310A for the purpose of avoiding interference with other members (for example, the front work lamp 14 and the like) at the time of rotation. Thus, the main body 310A can be easily formed. In addition, the main body 310A can be formed along the front end portion of the roof 11 in plan view, and the support frame 300A can be downsized in the forward-rearward directions (see Fig. 19). In addition, by dividing the main body 310A into the right and left portions, it is possible to reduce the cost of manufacturing the main body 310A and the like.

As shown in Fig. 18, in the present embodiment, an antenna 12b is provided on the fixing member 510 positioned on the left of the vehicle body. The antenna 12b is formed in a rod shape extending upward and downward. As the antenna 12b, a radio antenna can be employed. The antenna 12b is not limited to a radio antenna, and may be an antenna for various purposes, such as an antenna that transmits and receives information using various communication means such as the Internet or an antenna that communicates with a remote controller used for remote control of the tractor 1. In the present embodiment, the antenna 12b is provided in the fixing member 510. However, the antenna 12b may be provided in the fixing member 410, or the antenna 12b may be provided in both the fixing member 410 and the fixing member 510.

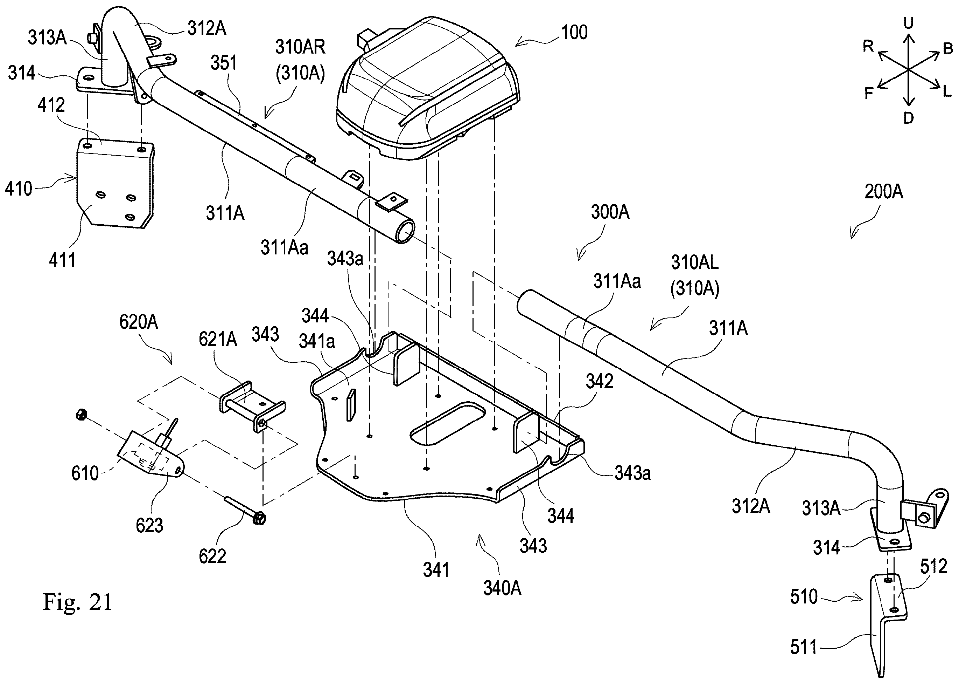

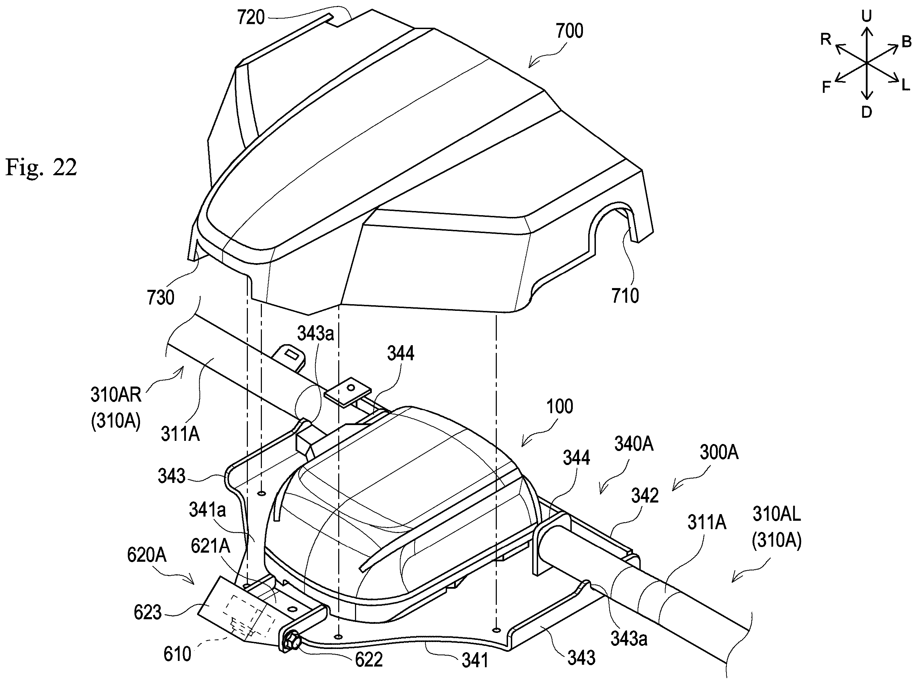

The support plate 340A shown in Figs. 21 and 22 supports the position detection device 100 and the front camera 610 (a front camera support 620A to be described later). The support plate 340A is fixed to each end portion (end portion on the center side in the rightward-leftward directions of the vehicle body) of the right main body 310AR and the left main body 310AL. The support plate 340A includes a main body 341, a rear wall 342, a side wall 343, and a fixing portion 344.

The main body 341 is a main structural body of the support plate 340A. The main body 341 is formed in a substantially plate shape with its thickness directions oriented in the upward-downward directions. The main body 341 is formed such that a front portion in plan view has a tapered shape (a shape in which a right and left width gradually decreases toward the front). More specifically, the main body 341 has a rear portion formed in a substantially rectangular shape in plan view, and a front portion formed in a substantially trapezoidal shape having a tapered shape.

The rear wall 342 is a portion rising upward from a rear end portion of the main body 341. The rear wall 342 is formed in a substantially plate shape with its thickness directions oriented in the forward-rearward directions.

The side wall 343 is a portion rising upward from both side end portions in the rightward-leftward directions in the rear portion of the main body 341. The side wall 343 is formed in a substantially plate shape with its thickness directions oriented in the rightward-leftward directions. On the right and left side walls 343, cutouts 343a are formed by cutting out the side walls 343 downward from the upper end portions. The cutout 343a is formed in a shape corresponding to a substantially lower half portion of the cross sectional shape of the first portion 311A of the support frame 300A. The lower half portion of the first portion 311A is fixed to the cutout 343a of the side wall 343 by welding or the like.

The fixing portion 344 is a portion to which the tip of the first portion 311A of the support frame 300A is fixed. A pair of fixing portions 344 is formed at intervals in the rightward-leftward directions. The fixing portion 344 is formed so as to protrude upward from an upper surface 344a of the main body 341. The fixing portion 344 is formed in a substantially plate shape with its thickness directions oriented in the rightward-leftward directions. The tip (tip surface) of the first portion 311A is fixed to the fixing portion 344 by welding or the like.

In the support plate 340A as described above, the position detection device 100 is fixed to an upper surface 341a of the rear portion of the main body 341 using a fastener such as a bolt. The position detection device 100 is disposed between the right and left fixing portions 344. That is, the position detection device 100 is disposed between the right main body 310AR and the left main body 310AL fixed to the upper surface 341a of the support plate 340A at intervals in the rightward-leftward directions. The front camera 610 is provided on the support plate 340A through the front camera support 620A.

The front camera support 620A shown in Figs. 21 and 22 supports the front camera 610. The front camera support 620A is fixed to the upper surface 341a of the front portion of the main body 341. In this manner, the front camera 610 (front camera support 620A) is provided forward with respect to the position detection device 100.

As shown in Fig. 21, the front camera support 620A includes a fixing portion 621A fixed to the upper surface 341a of the main body 341 using a fastener such as a bolt. The front camera 610 is supported by the fixing portion 621A through the front camera cover portion 623. The front camera cover portion 623 is a member that covers the front camera 610 from the circumference subtantially in the same manner as for the left side camera 640L (see Fig. 15). The front camera cover portion 623 is coupled to the fixing portion 621A through a support shaft 622 whose axial directions are oriented to the right and left. The support shaft 622 can be formed of, for example, a bolt.

Similarly to the first embodiment, the front camera 610 is disposed so as to face downward at an angle of approximately 45 degrees with respect to the horizontal ground. The front camera support 620A can adjust the angle of the front camera 610 in the upward-downward directions. Specifically, the front camera support 620A can adjust the angle of the front camera 610 in the upward-downward directions by loosening the bolt of the support shaft 622, for example, to rotate the front camera cover portion 623 in the upward-downward directions with the support shaft 622 centered.

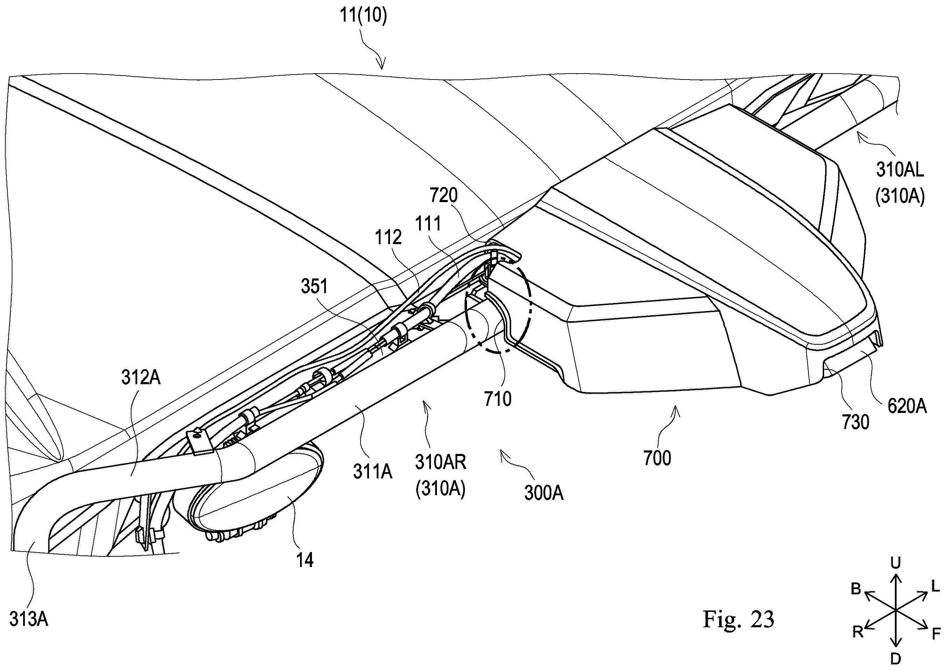

The unit cover portion 700 shown in Figs. 22 and 23 covers the upper surface 341a of the support plate 340A from above. The unit cover portion 700 is formed in a substantially box shape that opens downward. The unit cover portion 700 is fixed to the upper surface 341a of the support plate 340A using a fastener such as a bolt.

The unit cover portion 700 is formed in a shape corresponding to the support plate 340A in plan view. That is, substantially similarly to the support plate 340A, the unit cover portion 700 is formed such that a front portion in plan view has a tapered shape. The unit cover portion 700 configured as described above covers the position detection device 100, the front camera 610, the right main body 310AR, and the tip of the first portion 311A of the left main body 310AL provided on the upper surface of the support plate 340A (see Fig. 22).

As shown in Figs. 22 and 23, the unit cover portion 700 is formed with a frame cutout 710 which is a cutout for avoiding interference with the first portion 311A of the right main body 310AR and the left main body 310AL. The frame cutout 710 is formed by cutting out sidewalls on both sides in the rightward-leftward directions of the unit cover portion 700 upward from a lower end portion. The frame cutout 710 is formed in a substantially U shape (inverted U shape) in side view.

In addition, as shown in Figs. 19 and 23, a wire cutout 720 for avoiding interference with the wire 111 connected to the position detection device 100 and the wire 112 connected to the front camera 610 is formed in the unit cover portion 700. The wire cutout 720 is formed so as to cut out a right rear corner of the unit cover portion 700 in plan view. The wire cutout 720 is formed by cutting out a portion where the frame cutout 710 is formed in the right side wall of the unit cover portion 700.

A remaining portion (a portion surrounded by a two-dot chain line in Fig. 23) of the portion where the wire cutout 720 is formed in the sidewall on the right of the unit cover portion 700 is formed such that the rear end portion extends rearward with respect to the center of the first portion 311A of the right main body 310AR in cross sectional view. This allows the unit cover portion 700 to suitably cover the front portion of the first portion 311A of the right main body 310AR. According to the above configuration, in a case where the unit cover portion 700 is viewed from the front, the right side where the wire cutout 720 is formed and the left side where the wire cutout 720 is not formed can be seen as having substantially similar shapes, and the aesthetic appearance of the unit cover portion 700 can be improved.

The wire 111 and the wire 112 are extracted to the right of the unit cover portion 700 through the wire cutout 720 and are provided along the right main body 310AR. As shown in Fig. 21, a lower cover portion 351 is provided in the first portion 311A of the right main body 310AR. The wire 111 and the wire 112 are fixed to the lower cover portion 351, and are provided inside the cabin 10 through the extraction port 13a of the beam 13 substantially in the same manner as in the first embodiment (see Fig. 23).

The unit cover portion 700 is formed with an opening 730 that opens forward so as to expose the front camera 610. The unit cover portion 700 covers substantially the entire front camera 610 and front camera support 620A from above. In the illustrated example, an example is shown in which the front end portion of the front camera cover portion 623 slightly protrudes forward from the opening 730. The unit cover portion 700 can prevent rain or the like from directly hitting the connector portion connected to the wire 111 and the wire 112 in the position detection device 100 and the front camera 610.

The tractor 1A according to the second embodiment of the present disclosure has been described above. According to the present embodiment, the support frame 300A is unrotatably formed. Thus, the rigidity of the support frame 300A can be improved. This prevents the front camera 610 from shaking because of vibration, and enables suitably imaging the front of the vehicle body of the tractor 1A.

In the tractor 1A, the position detection device 100, the support plate 340A, the front camera 610, the front camera support 620A, and the unit cover portion 700 are integrated as a unit. The unit cover portion 700 constituting the upper end of the unit is disposed at a position lower than the entire height of the vehicle body of the tractor 1A. More specifically, the upper end portion of the unit cover portion 700 is positioned below a horizontal total height line L1 (see Fig. 17). Here, the horizontal total height line L1 indicates the total height of the vehicle body of the tractor 1 in a substantially horizontal orientation (for example, the height of the upper end portion of the roof 11 or the muffler 4a).

In the present embodiment, the main body 310A (the right main body 310AR and the left main body 310AL) of the support frame 300A is divided into the right and left portions, and the position detection device 100 is disposed between them. More specifically, as shown in Fig. 22, the position detection device 100 is disposed on the upper surface 341a of the support plate 340A so as to be positioned between the end portions of the right main body 310AR and the left main body 310AL (tips of the first portions 311A). In this manner, the position detection device 100 is disposed at the same height as the end portions of the right main body 310AR and the left main body 310AL. In addition, the position detection device 100 and the end portions of the right main body 310AR and the left main body 310AL are disposed to overlap each other in side view. That is, in the position detection device 100, the front and rear positions overlap each of the end portions of the right main body 310AR and the left main body 310AL.

According to the above configuration, for example, the height position of the position detection device 100 can be lowered as compared with the case where the position detection device 100 (support plate 340) is disposed on the upper side of the main body 310 of the support frame 300 as in the first embodiment. In this manner, according to the present embodiment, it is possible to downsize the tractor 1A in the upward-downward directions with support frame 300A being unrotatable, and it is easy to store and transport the tractor 1A into a garage or the like. In addition, when the tractor 1A is stored, this can omit the work of rotating the support frame 300A between the use position and the non-use position, and it is possible to reduce the burden on the operator.

According to the above configuration, the units (the position detection device 100, the support plate 340A, the unit cover portion 700, and the like) can be downsized in the upward-downward directions. Thus, even when the height of the units is reduced, the units can be prevented from blocking the field of view of the driver in the cabin 10 looking forward. That is, instead of simply disposing the position detection device 100 and the like on the lower side of the main body 310 of the support frame 300 according to the first embodiment, in the present embodiment, the main body 310A (the right main body 310AR and the left main body 310AL) is divided into the right and left portions, and the position detection device 100 is disposed between them. This can suppress the position of the unit from being excessively lowered and prevent the unit from blocking the field of view of the driver.

In the present embodiment, the support plate 340A of the support frame 300A is disposed at a position higher than the upper end of the windshield of the cabin 10. This can dispose the unit so as not to overlap the windshield of the cabin 10 in front view and can prevent the unit from blocking the field of view of the driver in the cabin 10.

In addition, according to the above configuration, the position detection device 100 and the end portions of the right main body 310AR and the left main body 310AL overlap each other in side view. Thus, it is possible to downsize the unit in the forward-rearward directions. This can prevent the unit from coming out too far forward and blocking the field of view when the driver in the cabin 10 looks at the upper front, and can prevent the support plate 340A and the unit cover portion 700 from being shaded in the cabin 10.

In the present embodiment, the front portions of the support plate 340A and the unit cover portion 700 are formed in a tapered shape. This can more preferably prevent the unit from blocking the field of view of the driver in the cabin 10 when the driver looks at the upper front. In addition, it is possible to reduce the weight of the support plate 340A and the unit cover portion 700.

As described above, the tractor 1 (working vehicle) according to the present embodiment includes: the position detection device 100 capable of detecting a position of a vehicle body; the front camera 610 (front imaging unit) disposed in front of the position detection device 100 and capable of imaging a front; and a support frame 300 that supports the position detection device 100 and the front camera 610 and is disposed to extend over the right and left pillars 12 of the cabin 10.

With this configuration, it is easy to secure the field of view of the front camera 610 capable of imaging the front. That is, by disposing the front camera 610 in front of position detection device 100, the front camera 610 can be disposed at a relatively high position. This makes it easy to secure the field of view of the front camera 610. In addition, by disposing the front camera 610 at a relatively high position, a wide range of the ground can be imaged (detected). In addition, by disposing the front camera 610 at a relatively high position, it is possible to prevent the front camera 610 from entering the field of view (upper front side) of the operator (driver) who gets on the cabin 10 and impairing the field of view on the front side.

The support frame 300 includes the support plate 340 (support plate) formed in a flat plate shape and on which the position detection device 100 and the front camera 610 are placed.

With such a configuration, the position detection device 100 and the front camera 610 can be supported with a simple configuration.

The tractor 1 includes a coupling portion (the first coupling portion 400 and the second coupling portion 500) that rotatably couples the support frame 300 with respect to each of the right and left pillars 12.

With such a configuration, the positions of the position detection device 100 and the front camera 610 can be changed. For example, when the tractor 1 is not used, the support frame 300 can be rotated to store the position detection device 100 and the like at a low position.

The tractor 1 includes: a pair of right and left side cameras 640 (side imaging units) provided on both right and left sides of the cabin 10 and capable of imaging a side; and a pair of right and left rear cameras 670 (rear imaging units) provided on a rear portion of the cabin 10 and capable of imaging a rear.

With such a configuration, it is possible to take an image of a wide range around the tractor 1. In addition, the image taken by each camera can be used for various purposes (for example, automatic traveling or the like of the tractor 1).

In addition, at least one of the front camera 610, the side camera 640, and the rear camera 670 is configured to be capable of adjusting the orientation in the horizontal directions.

With such a configuration, for example, even when a dimensional error such as a dimensional error of a frame of the cabin 10 is generated, the camera can be adjusted to face an appropriate direction.

The tractor 1 includes a cover portion (the front camera cover portion 630 and the side camera cover portion 660) provided in at least one of the front camera 610, the side cameras 640, and the rear cameras 670 and covering the camera from at least one side.

With this configuration, it is possible to prevent the camera from being irradiated with sunlight or light from a lighting device. In addition, adhesion of mud, dust, rainwater, and the like to the camera can be reduced.

As described above, the tractor 1 (working vehicle) according to the present embodiment includes: the front camera 610 (front imaging unit) provided on a front portion of the cabin 10 and capable of imaging a front; a pair of right and left side cameras 640 (side imaging units) provided on both right and left sides of the cabin 10 and capable of imaging a side; and a pair of right and left rear cameras 670 (rear imaging units) provided on a rear portion of the cabin 10 and capable of imaging a rear.

With such a configuration, it is possible to take an image of a wide range around the tractor 1. In addition, the image taken by each camera can be used for various purposes (for example, automatic traveling or the like of the tractor 1).

In addition, at least one of the front camera 610, the side camera 640, and the rear camera 670 is configured to be capable of adjusting the orientation in the horizontal directions.

With such a configuration, for example, even when a dimensional error such as a dimensional error of a frame of the cabin 10 is generated, the camera can be adjusted to face an appropriate direction.

The tractor 1 includes a cover portion (the front camera cover portion 630 and the side camera cover portion 660) provided in at least one of the front camera 610, the side cameras 640, and the rear cameras 670 and covering the camera from at least a side.

With this configuration, it is possible to prevent the camera from being irradiated with sunlight or light from a lighting device. In addition, adhesion of mud, dust, rainwater, and the like to the camera can be reduced.

Any three of the front camera 610, the side camera 640, and the rear camera 670 (left side camera 640L, left rear camera 670L, and right rear camera 670R, and right side camera 640R, right rear camera 670R, and left rear camera 670L, see Fig. 12) are disposed such that their imaging ranges overlap each other.

With this configuration, images in overlapping ranges can be acquired by the three cameras. Thus, more accurate information (for example, presence or absence of a person or an obstacle, and the like) can be acquired.

The support frame 300A of the tractor 1A according to the present embodiment is unrotatably coupled to each of the right and left pillars 12, and the support frame 300A is fixed to the upper surface 341a (placement surface) of the support plate 340A on which the position detection device 100 and the front camera 610 are placed.

With this configuration, the rigidity of the support frame 300A can be improved, and the height position of the position detection device 100 or the like can be lowered. That is, the rigidity of the support frame 300A can be improved by unrotatably forming the support frame 300A. This prevents the front camera 610 from shaking because of vibration, and enables suitably imaging the front of the vehicle body of the tractor 1A. In addition, according to the above configuration, the support plate 340A can be provided on the lower side of the support frame 300A, and the height position of the position detection device 100 can be lowered.

The support frame 300A includes a pair of right main body 310AR and left main body 310AL (divided frames) divided in rightward-leftward directions, and the position detection device 100 is disposed between the pair of right main body 310AR and left main body 310AL.

With this configuration, it is possible to prevent the position detection device 100 and the support frame 300A from blocking the field of view of the driver in the cabin 10. That is, by disposing the position detection device 100 between the right main body 310AR and the left main body 310AL divided into the right and left portions, it is possible to suppress the position detection device 100 from being excessively lowered unlike the case where the position detection device 100 is simply disposed below a support frame that is not divided. This can prevent the position detection device 100 or the like from blocking the field of view of the driver in the cabin 10 when the driver looks at the upper front.

The tractor 1A includes the unit cover portion 700 fixed to the support plate 340A and covering the position detection device 100 and the front camera 610 from above.

This configuration can protect the position detection device 100 and the front camera 610 from rainwater or the like.

The unit cover portion 700 is disposed at a position lower than an entire height of the vehicle body.

With this configuration, it is possible to downsize the tractor 1A in the upward-downward directions with the support frame 300A being unrotatable, and it is easy to store and transport the tractor 1A into a garage or the like. In addition, when the tractor 1A is stored, this can omit the work of rotating the support frame 300A between the use position and the non-use position, and it is possible to reduce the burden on the operator.

A front portion of the unit cover portion 700 and a front portion of the support plate 340A are formed in a tapered shape in plan view.

This configuration can prevent the field of view of the driver in the cabin 10 from being blocked when the driver looks at the upper front. In addition, it is possible to prevent the support plate 340A and the unit cover portion 700 from being shaded in the cabin 10.

The front camera 610, the side camera 640, and the rear camera 670 according to the present embodiment are embodiments of a front imaging unit, a side imaging unit, and a rear imaging unit according to the present invention, respectively.

The front camera cover portion 630 and the side camera cover portion 660 according to the present embodiment are embodiments of the cover portion according to the present invention.

The support plate 340 according to the present embodiment is an embodiment of the support plate according to the present invention.

The first coupling portion 400 and the second coupling portion 500 according to the present embodiment are embodiments of the coupling portion according to the present invention.

The right main body 310AR and the left main body 310AL according to the present embodiment are embodiments of the divided frame according to the present invention.

The upper surface 341a according to the present embodiment is an embodiment of the placement surface according to the present invention.

One embodiment of the present invention has been described above, but the present invention is not limited to the above configuration, and various modifications can be made within the scope of the invention described in the claims.

For example, in the above embodiment, a configuration in which the position of the position detection device 100 and the like can be changed by rotating the support frame 300 has been exemplified, but the present invention is not limited to this configuration. For example, it is also possible to unrotatably configure the support frame 300.

The side camera 640 and the rear camera 60 can be attached to a support member such as the support frame 300.

In the above embodiment, a configuration in which the front camera 610 can be rotated in the upward-downward directions has been exemplified. However, for example, the front camera 610 may be configured to be rotatable on the right and left (in the horizontal directions) (the angle in the horizontal directions can be adjusted).

In the above embodiment, the angles of the side camera 640 and the rear camera 670 can be adjusted in the horizontal directions and the upward-downward directions, but the present invention is not limited to this configuration. For example, the angle of the cameras may be adjustable only in the horizontal directions or only in the upward-downward directions. It is also possible to configure each camera such that the angle cannot be adjusted.

In the above embodiment, an example of the cover portion (the front camera cover portion 630 and the side camera cover portion 660) that covers each camera has been described, but the shape of the cover portion according to the present invention is not limited to this configuration. For example, as shown in Fig. 16, the side camera cover portion 660 is formed so as to cover the left side camera 640L from the upper side, the left side, and both the front and rear sides, but the cover portion may be formed so as to further cover the camera from the right side. Similarly, for the right side camera 640R, the side camera cover portion 660 is formed so as to cover the right side camera 640R from the upper side, the right side, and both the front and rear sides, but the cover portion may be formed so as to further cover the camera from the left side. Each cover portion does not have to be configured to cover the camera from above. From the viewpoint of preventing light irradiation, each cover portion is preferably disposed at least on one side of the camera.

In the above embodiment, a configuration in which the angle of the cameras can be adjusted by rotating the cameras about the support shaft has been exemplified. However, the present invention is not limited to this configuration, and the configuration for rotating the cameras (adjusting the angle) can be freely changed. For example, in the above embodiment, the angle of the cameras can be adjusted steplessly, but the angle of the cameras can be adjusted stepwise.

In the above embodiment, a camera using a wide-angle lens such as a fisheye lens has been exemplified, but the type of the camera and the lens is not particularly limited. The imaging range of each camera is not particularly limited, and for example, a camera having an imaging range of less than 180 degrees can also be used. However, from the viewpoint of taking an image of the circumference of the tractor 1 without omission, it is preferable to appropriately set the imaging range of the cameras such that a blind spot is not formed in the imaging range of the cameras.

The cover portion (for example, the front camera cover portion 630 that covers the front camera 610) covering each camera is formed by appropriately deforming a panel member, but the cover portion can be formed by other methods (for example, resin molding or the like).

It is also possible to appropriately combine the configuration of the tractor 1 according to the first embodiment with the configuration of the tractor 1A according to the second embodiment. For example, the support frame 300 according to the first embodiment formed to be rotatable can be divided in the rightward-leftward directions like the support frame 300A according to the second embodiment, and the position detection device 100 can be disposed between them. The support frame 300 according to the first embodiment may be provided with the unit cover portion 700.

In addition, the shape, structure, and the like of each portion exemplified in the above embodiments are merely examples, and the configuration of each portion can be freely changed.

In the above embodiment, the tractor 1 has been exemplified as the working vehicle, but the working vehicle is not limited to such a mode. For example, the working vehicle may be another agricultural vehicle, a construction vehicle, an industrial vehicle, or the like.

### INDUSTRIAL APPLICABILITY

The present invention can be applied to a working vehicle.

### REFERENCE SIGNS LIST

1: Tractor
10: Cabin
100: Position detection device
300: Support frame
340: Support plate
400: First coupling portion
500: Second coupling portion
610: Front camera
640: Side camera
670: Rear camera
700: Unit cover portion

## Claims

1. A working vehicle comprising:
a position detection device capable of detecting a position of a vehicle body;
a front imaging unit disposed in front of the position detection device and capable of imaging a front; and
a support frame that supports the position detection device and the front imaging unit and is disposed to extend over right and left pillars of a cabin.

2. The working vehicle according to claim 1, wherein the support frame includes a support plate formed in a flat plate shape and on which the position detection device and the front imaging unit are placed.

3. The working vehicle according to claim 1, comprising a coupling portion that rotatably couples the support frame with respect to each of the right and left pillars.

4. The working vehicle according to claim 1, comprising:
a pair of right and left side imaging units provided on both right and left sides of the cabin and capable of imaging a side; and
a pair of right and left rear imaging units provided on a rear portion of the cabin and capable of imaging a rear.

5. The working vehicle according to claim 4, wherein at least one of the front imaging unit, the side imaging units, and the rear imaging units is configured to be capable of adjusting an orientation in horizontal directions.

6. The working vehicle according to claim 4, comprising a cover portion provided in at least one of the front imaging unit, the side imaging units, and the rear imaging units and covering the imaging unit from at least the side.

7. The working vehicle according to claim 2, wherein
the support frame is unrotatably coupled to each of the right and left pillars, and
the support frame is fixed to a placement surface of the support plate on which the position detection device and the front imaging unit are placed.

8. The working vehicle according to claim 1 or 7, wherein
the support frame includes a pair of divided frames divided in rightward-leftward directions, and
the position detection device is disposed between the pair of divided frames.

9. The working vehicle according to claim 7, comprising a unit cover portion fixed to the support plate and covering the position detection device and the front imaging unit from above.

10. The working vehicle according to claim 9, wherein the unit cover portion is disposed at a position lower than an entire height of the vehicle body.

11. The working vehicle according to claim 9, wherein a front portion of the unit cover portion and a front portion of the support plate are formed in a tapered shape in plan view.
